(19) **Europäisches Patentamt** / **European Patent Office** / **Office européen des brevets**

(11) **EP 4 510 106 A1**

(12) **EUROPEAN PATENT APPLICATION**
published in accordance with Art. 153(4) EPC

(43) Date of publication:
**19.02.2025 Bulletin 2025/08**

(21) Application number: **23788155.2**

(22) Date of filing: **27.03.2023**

(51) International Patent Classification (IPC):
***G08G 1/09*** (2006.01)

(52) Cooperative Patent Classification (CPC):
**G05D 1/2279; G06Q 10/047; G06Q 10/063;
G06Q 50/40; G08G 1/0112; G08G 1/0133;
G08G 1/0145; G08G 1/096725; G08G 1/096741;
G08G 1/096775; G08G 1/096811; G08G 1/096822;
G08G 1/164; G08G 1/20;** G05D 2105/20;    (Cont.)

(86) International application number:
**PCT/JP2023/012109**

(87) International publication number:
**WO 2023/199735 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2022  JP 2022065723**

(71) Applicant: **Sony Group Corporation
Tokyo 108-0075 (JP)**

(72) Inventors:
• **TOMONAGA Seishi
Tokyo 108-0075 (JP)**
• **IMAMURA Hiroshi
Tokyo 108-0075 (JP)**

• **YOSHITOMI Kosuke
Tokyo 108-0075 (JP)**
• **TAKAMATSU Takashi
Tokyo 108-0075 (JP)**
• **KUBOTA Hiroyuki
Tokyo 108-0075 (JP)**
• **UCHIDA Tetsuhiro
Tokyo 108-0075 (JP)**
• **YAMAMOTO Kozue
Tokyo 108-0075 (JP)**
• **TAKEUCHI Hiroshi
Tokyo 108-0075 (JP)**
• **KAWAMURA Ken
Tokyo 108-0075 (JP)**

(74) Representative: **Witte, Weller & Partner
Patentanwälte mbB
Postfach 10 54 62
70047 Stuttgart (DE)**

(54) **INFORMATION PROCESSING SYSTEM, INFORMATION PROCESSING METHOD, AND INFORMATION PROCESSING DEVICE**

(57)    The present technology relates to an information processing system, an information processing method, and an information processing apparatus that are capable of assigning an appropriate operator to a vehicle on the basis of both the state of the vehicle to be remotely monitored and the state of the operator.

A vehicle state determination unit determines states of a plurality of vehicles to be remotely monitored. A monitoring state determination unit determines states of a plurality of operators regarding remote monitoring. An assignment unit assigns, on the basis of the states of the plurality of vehicles that are determined by the vehicle state determination unit and the states of the plurality of operators regarding remote monitoring that are determined by the monitoring state determination unit, one or more of the operators to each of the plurality of vehicles to remotely monitor the vehicle. The present technology is applicable to a management system, for example.

FIG.2

**(Cont. next page)**

EP 4 510 106 A1

(52) Cooperative Patent Classification (CPC): (Cont.)
   G05D 2107/13; G05D 2109/10

## Description

Technical Field

The present technology relates to an information processing system, an information processing method, and an information processing apparatus, and particularly to, an information processing system, an information processing method, and an information processing apparatus that are capable of assigning an appropriate operator to a vehicle on the basis of both the state of the vehicle to be remotely monitored and the state of the operator.

Background Art

With the development of automated driving technologies, it is desired to achieve fully automated driving without the need for a driver in a vehicle. On the other hand, automated driving vehicles encounter a wide variety of situations in the real world, and it is difficult for the automated driving vehicles to continue travelling only on the basis of their own determinations in all situations. Therefore, the remote driving technologies that assist driving from a remote location when an automated driving vehicle is unable to continue travelling have been attracting attention.

The remote driving include remote monitoring operations, remote assistance operations, remote piloting operations, and other operations. The remote monitoring operations are operations of monitoring the vehicle's driving state and the passenger's conditions from a remote location. The remote assistance operations are operations of temporarily taking over driving or giving traveling instructions to a vehicle from a remote location when the vehicle is unsure of determining whether to travel and has a problem in traveling. The remote piloting operations are operations of performing all control of a vehicle from a remote location. When remote driving is performed for a vehicle, a remote operator (operator) is assigned to the vehicle, and that operator performs remote driving. Various methods have been proposed for methods of assigning operators in remote driving.

For example, there is a method of efficiently monitoring and controlling a plurality of automated driving vehicles with a small number of remote drivers by assigning remote drivers to the vehicles on the basis of the standby time of the remote drivers, the cumulative remote operation time, control numbers, and the like (see, for example, Patent Literature 1).

When a remote driver who can consistently take charge of a vehicle from the start point to the end point of a remote driving route cannot be assigned to a vehicle, there is a method of dividing the route into a plurality of sections on the basis of route information and assigning remote drivers to the sections (see, for example, Patent Literature 2).

There is a method of assigning remote control operations to operators according to the processing order based on the operation time required for remote control of each vehicle and the priority (see, for example, Patent Literature 3).

There is a method of assigning a remote operator to a vehicle on the basis of a time lag, which is the time between when information is presented to a remote operator and when a driving operation performed by the remote operator is accepted, and remote operator's information such as a proficiency level or an arousal level in remote driving (see, for example, Patent Document 4).

Citation List

Patent Literature

Patent Literature 1: Japanese Patent No. 6697686
Patent Literature 2: Japanese Patent Application Laid-open No. 2021-15378
Patent Literature 3: Japanese Patent Application Laid-open No. 2019-185279
Patent Literature 4: Japanese Patent No. 6650386

Disclosure of Invention

Technical Problem

However, it has not been considered to assign an appropriate operator to a vehicle on the basis of both the state of the vehicle to be remotely monitored and the state of the operator. Therefore, there is a demand for a technique that can achieve such devising, but such a demand has not been fully met.

The present technology has been made in view of the above circumstances, and is intended to assign an appropriate operator to a vehicle on the basis of both the state of a vehicle to be remotely monitored and the state of an operator.

Solution to Problem

An information processing system of a first aspect of the present technology is an information processing system including: a vehicle state determination unit that determines states of a plurality of vehicles to be remotely monitored; a monitoring state determination unit that determines states of a plurality of operators regarding remote monitoring; and an assignment unit that assigns, on the basis of the states of the plurality of vehicles that are determined by the vehicle state determination unit and the states of the plurality of operators regarding remote monitoring that are determined by the monitoring state determination unit, one or more of the plurality of operators to each of the plurality of vehicles to remotely monitor the vehicle.

An information processing method of a first aspect of the present technology is an information processing method for an information processing system, the method including: a vehicle state determination step of determining states of a plurality of vehicles to be remotely monitored; a monitoring state determination step of determining states of a plurality of operators regarding remote monitoring; and an assignment step of assigning, on the basis of the states of the plurality of vehicles that are determined by processing of the vehicle state determination step and the states of the plurality of operators regarding remote monitoring that are determined by processing of the monitoring state determination step, one or more of the plurality of operators to each of the plurality of vehicles to remotely monitor the vehicle.

In the first aspect of the present technology, the states of the plurality of vehicles to be remotely monitored are determined, the states of the plurality of operators regarding remote monitoring are determined, and on the basis of the states of the plurality of vehicles and the states of the plurality of operators regarding remote monitoring, one or more of the plurality of operators are assigned to each of the plurality of vehicles to remotely monitor the vehicle.

An information processing apparatus of a second aspect of the present technology is an information processing apparatus including an assignment unit that assigns, on the basis of states of a plurality of vehicles to be remotely monitored and states of a plurality of operators regarding remote monitoring, one or more of the plurality of operators to each of the plurality of vehicles to remotely monitor the vehicle.

In the second aspect of the present technology, on the basis of the states of the plurality of vehicles to be remotely monitored and the states of the plurality of operators regarding remote monitoring, one or more of the plurality of operators are assigned to each of the plurality of vehicles to remotely monitor the vehicle.

Each of the information processing system of the first aspect and the information processing apparatus of the second aspect may be an independent apparatus or may be a module incorporated into another apparatus.

Note that the information processing system of the first aspect and the information processing apparatus of the second aspect can be achieved by causing a computer to execute a program.

Further, in order to achieve the information processing system of the first aspect and the information processing apparatus of the second aspect, the program to be executed by a computer can be provided by transmission through a transmission medium or by recording on a recording medium.

Brief Description of Drawings

[Fig. 1] Fig. 1 is a block diagram showing a configuration example of a first embodiment of a management system to which the present technology is applied.
[Fig. 2] Fig. 2 is a block diagram showing a detailed configuration example of the vehicle, the remote monitoring apparatus, and the management apparatus of Fig. 1.
[Fig. 3] Fig. 3 is a table showing an example of the relationship between a vehicle type and a basic score of a required proficiency level.
[Fig. 4] Fig. 4 is a table showing an example of the relationship between the type of road and a correction factor for the required proficiency level.
[Fig. 5] Fig. 5 is a table showing an example of the relationship between the type of traveling and a correction factor for the required proficiency level.
[Fig. 6] Fig. 6 is a table showing an example of the relationship between the weather and a correction factor for the required proficiency level.
[Fig. 7] Fig. 7 is a table showing an example of the relationship between the number of years of automobile driving of an operator and a basic score of a proficiency level.
[Fig. 8] Fig. 8 is a table showing an example of the relationship between a reaction speed and a correction factor for the proficiency level.
[Fig. 9] Fig. 9 is a diagram for describing a first example of assignment by the management apparatus in Fig. 2.
[Fig. 10] Fig. 10 is a table showing an example of the relationship between a traveling speed and a correction factor for the required proficiency level.

[Fig. 11] Fig. 11 is a diagram for describing a second example of assignment by the management apparatus in Fig. 2.

[Fig. 12] Fig. 12 is a flowchart for describing assignment processing by the management apparatus in Fig. 2.

[Fig. 13] Fig. 13 is a block diagram showing a configuration example of a second embodiment of a management system to which the present technology is applied.

[Fig. 14] Fig. 14 is a diagram for describing an example of assignment by the management apparatus in Fig. 13.

[Fig. 15] Fig. 15 is a flowchart for describing assignment processing by the management apparatus in Fig. 13.

[Fig. 16] Fig. 16 is a block diagram showing a configuration example of a third embodiment of a management system to which the present technology is applied.

[Fig. 17] Fig. 17 is a diagram for describing a first example of assignment by the management apparatus in Fig. 16.

[Fig. 18] Fig. 18 is a diagram for describing a second example of assignment by the management apparatus in Fig. 16.

[Fig. 19] Fig. 19 is a flowchart for describing assignment processing by the management apparatus in Fig. 16.

[Fig. 20] Fig. 20 is a block diagram showing a configuration example of a fourth embodiment of a management system to which the present technology is applied.

[Fig. 21] Fig. 21 is a diagram for describing an example of assignment by the management apparatus in Fig. 20.

[Fig. 22] Fig. 22 is a flowchart for describing assignment processing by the management apparatus in Fig. 20.

[Fig. 23] Fig. 23 is a block diagram showing a configuration example of a fifth embodiment of a management system to which the present technology is applied.

[Fig. 24] Fig. 24 is a block diagram showing a configuration example of computer hardware.

Mode(s) for Carrying Out the Invention

Hereinafter, embodiments for carrying out the present technology (hereinafter, referred to as "embodiments") will be described. Note that description will be given in the following order.

1. First embodiment (management system for assigning one operator to one or more vehicles on the basis of proficiency level)

2. Second embodiment (management system for assigning one operator to each of one or more parts of one or more vehicles on the basis of proficiency level)

3. Third embodiment (management system for assigning one or more operators to each of one or more parts of one or more vehicles on the basis of proficiency level)

4. Fourth embodiment (management system for performing assignment on the basis of arousal level)

5. Fifth embodiment (management system for performing assignment on the basis of state level)

6. Computer

<First Embodiment>

<Configuration Example of Management System>

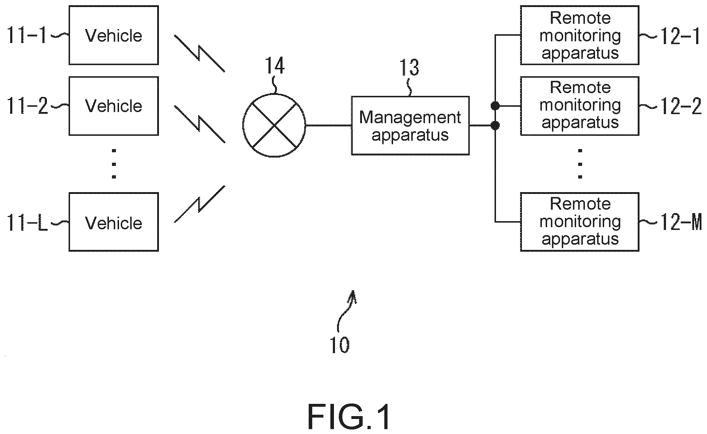

Fig. 1 is a block diagram showing a configuration example of a first embodiment of a management system as an information processing system to which the present technology is applied.

A management system 10 shown in Fig. 1 includes L (L is an integer equal to or greater than 1) vehicles 11-1 to 11-L, and a management apparatus 13 connected to M remote monitoring apparatuses 12-1 to 12-M (M is an integer equal to or greater than 1), which are connected via a wireless network 14.

Note that, in the following, if there is no need to distinguish between the vehicles 11-1 to 11-L, they will be collectively referred to as vehicles 11. Similarly, the remote monitoring apparatuses 12-1 to 12-M will be collectively referred to as remote monitoring apparatuses 12. The management system 10 assigns, to a vehicle 11, a remote monitoring apparatus 12 that remotely monitors that vehicle 11.

Specifically, the vehicle 11 of the management system 10 is a private car, a bus, a truck, a trailer, or other vehicle subjected to remote monitoring operations. The vehicle 11 generates driving state information representing the driving state of the vehicle 11 and peripheral environment information representing the state of the peripheral environment of the vehicle 11. The vehicle 11 holds vehicle characteristic information representing the characteristics of the vehicle 11. The vehicle 11 determines the its own state on the basis of the driving state information, the peripheral environment information, and the vehicle characteristic information. The vehicle 11 calculates a required proficiency level Rp (required state level) that is the level of operator's (remote monitor's) proficiency state regarding the remote monitoring operation, which is required for the remote monitoring operation for the vehicle 11, on the basis of the state of the vehicle 11. The vehicle 11 transmits the required proficiency level Rp to the management apparatus 13 via the wireless network 14. This transmission may be initiated spontaneously by the vehicle 11, for example, when a remote monitoring operation for the vehicle 11 becomes necessary, or it may be initiated by the management apparatus 13 searching for the vehicle 11 that needs a remote monitoring operation and making a request to that vehicle 11.

The remote monitoring apparatus 12 is used by an operator to perform a remote monitoring operation on the vehicle 11. The remote monitoring apparatus 12 holds operator characteristic information representing the characteristics of the operator who uses that remote monitoring apparatus 12. The remote monitoring apparatus 12 determines an operator's state regarding the remote monitoring operation on the basis of the operator characteristic information. The remote monitoring apparatus 12 calculates, on the basis of the operator's state regarding the remote monitoring operation, a proficiency level P (state level) that is the level of operator's proficiency state regarding the remote monitoring operation, and transmits it to the management apparatus 13.

Note that, in the management system 10, the number of operators who use one remote monitoring apparatus 12 at the same time is assumed to be one, but if multiple operators can perform remote monitoring operations independently at the same time using the remote monitoring apparatus 12, the number of operators who use one remote monitoring apparatus 12 at the same time may be multiple. In this case, the remote monitoring apparatus 12 holds the operator characteristic information of each operator, calculates a proficiency level P for each operator on the basis of the operator characteristic information of each operator, and transmits that proficiency level P to the management apparatus 13.

The remote monitoring apparatus 12 also receives, from the management apparatus 13, assigned vehicle identification information for identifying the vehicle 11 assigned to an operator who uses the remote monitoring apparatus 12. The remote monitoring apparatus 12 requests the operator who uses that remote monitoring apparatus 12 to perform a remote monitoring operation for the vehicle 11 identified by the assigned vehicle identification information.

The management apparatus 13 receives the required proficiency level Rp from each vehicle 11 via the network 14. The management apparatus 13 receives the operator's proficiency level P from each remote monitoring apparatus 12. On the basis of the required proficiency level Rp of each vehicle 11 and the proficiency level P of each operator, the management apparatus 13 assigns one operator who remotely monitors a vehicle 11 to each vehicle 11. The remote monitoring apparatus 12 transmits the assigned vehicle identification information for identifying the vehicle 11, which is assigned to each operator, to the remote monitoring apparatus 12 to be used by that operator.

Note that the remote monitoring apparatus 12 and the management apparatus 13 may be connected to each other via a wired or wireless network.

<Detailed Configuration Example of Vehicle, Remote Monitoring Apparatus, and Management Apparatus>

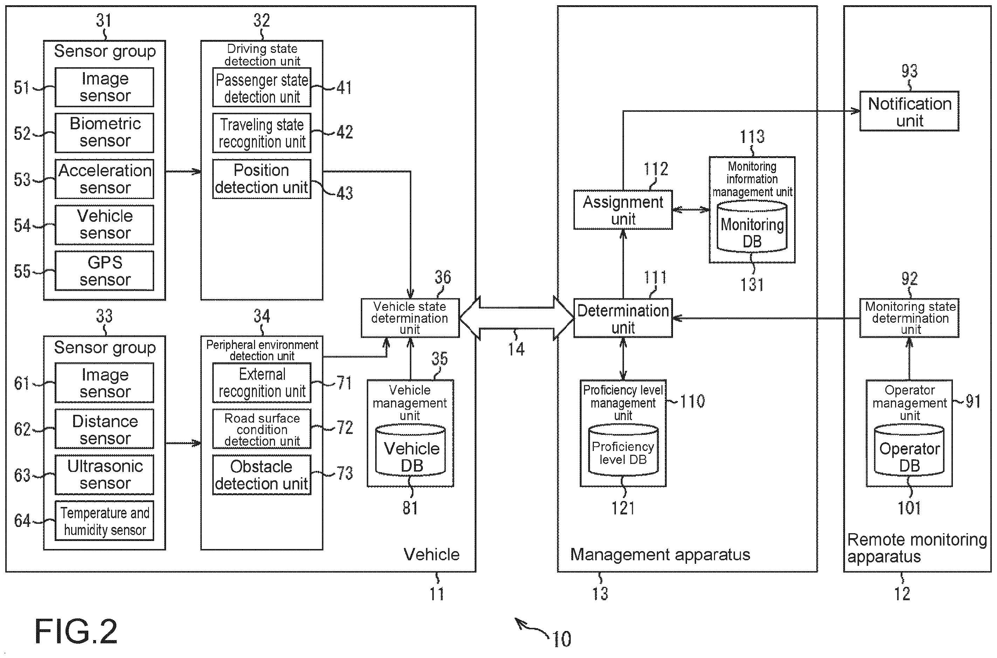

Fig. 2 is a block diagram showing a detailed configuration example of the vehicle 11, the remote monitoring apparatus 12, and the management apparatus 13 of Fig. 1.

As shown in Fig. 2, the vehicle 11 includes a sensor group 31, a driving state detection unit 32, a sensor group 33, a peripheral environment detection unit 34, a vehicle management unit 35, and a vehicle state determination unit 36.

The sensor group 31 includes an image sensor 51, a biometric sensor 52, an acceleration sensor 53, a vehicle sensor 54, and a global positioning system (GPS) sensor 55.

The image sensor 51 captures images of the interior of the vehicle 11 and provides the resulting captured images to the driving state detection unit 32. The biometric sensor 52 detects biometric information of a passenger of the vehicle 11 and supplies the biometric information to the driving state detection unit 32. The acceleration sensor 53 detects the acceleration of the vehicle 11 and supplies the acceleration to the driving state detection unit 32. The vehicle sensor 54 is a sensor provided to a steering wheel, an accelerator, a brake, or the like. The vehicle sensor 54 detects the state of the steering wheel, the accelerator, the brake, or the like, and supplies the state to the driving state detection unit 32. The GPS sensor 55 acquires position information on the basis of the GPS and supplies the position information to the driving state detection unit 32.

The driving state detection unit 32 includes a passenger state detection unit 41, a traveling state recognition unit 42, and a position detection unit 43.

The passenger state detection unit 41 detects the state of the passenger on the basis of the captured image supplied by the image sensor 51, the biometric information supplied by the biometric sensor 52, and the like. The traveling state recognition unit 42 recognizes the traveling state, such as the type of traveling and speed of the vehicle 11, on the basis of the acceleration supplied by the acceleration sensor 53, the state of steering, the accelerator, the brake, or the like supplied by vehicle sensor 54, and other information. The position detection unit 43 detects the current position of the vehicle 11, the type of road on which the vehicle 11 is traveling, the width of the road, and the like, as traveling position information regarding the traveling position of the vehicle 11, on the basis of the position information supplied by the GPS sensor 55. The types of road include highways, public roads, intersections, junctions, and the like.

The passenger state detected by the passenger state detection unit 41, the traveling state recognized by the traveling state recognition unit 42, and the traveling position information detected by the position detection unit 43 are supplied to the vehicle state determination unit 36 as driving state information.

The sensor group 33 includes an image sensor 61, a distance sensor 62, an ultrasonic sensor 63, and a temperature and humidity sensor 64.

The image sensor 61 captures images of the surroundings of the vehicle 11 and supplies the resulting captured images to the peripheral environment detection unit 34. The distance sensor 62 uses millimeter waves or laser light to detect the distance between its own vehicle 11 and a peripheral object such as another vehicle, a pedestrian, a bicycle, a motorcycle, or a building in the surrounding area, and supplies the distance to the peripheral environment detection unit 34. The ultrasonic sensor 63 uses ultrasonic waves to detect the distance between its own vehicle 11 and a peripheral object, and supplies that distance to the peripheral environment detection unit 34. The temperature and humidity sensor 64 detects the ambient temperature and air temperature, and supplies them to the peripheral environment detection unit 34.

The peripheral environment detection unit 34 includes an external recognition unit 71, a road surface condition detection unit 72, and an obstacle detection unit 73.

The external recognition unit 71 recognizes, as external information, the condition of the road on which the vehicle 11 is traveling (e.g., congestion), a distance from the vehicle 11 or the size of a peripheral object, etc., on the basis of the captured images supplied by the image sensor 61, the distances supplied by the distance sensor 62 and the ultrasonic sensor 63, and the like. The road surface condition detection unit 72 detects the condition of the road surface on which the vehicle 11 is traveling (e.g., poor visibility, slippery condition, etc. due to rainfall or snowfall) and weather on the basis of the temperature and humidity supplied by the temperature and humidity sensor 64 and the images captured by the image sensor 61. The obstacle detection unit 73 detects a distance from the vehicle 11, the size, etc., of an obstacle or a hazardous object that may obstruct traveling of the vehicle 11 among peripheral objects, as obstacle information, on the basis of the distance from the vehicle 11, the size, etc., of the peripheral objects recognized by the external recognition unit 71.

The external information recognized by the external recognition unit 71, the condition of the road surface and weather detected by the road surface condition detection unit 72, and the obstacle information detected by the obstacle detection unit 73 are supplied to the vehicle state determination unit 36 as peripheral environment information.

The vehicle management unit 35 includes a vehicle DB 81. The vehicle DB 81 holds the vehicle characteristic information representing, as characteristics, the vehicle type and size of the vehicle 11 and kinematic performance such as maximum speed, drive capacity, braking capacity, and minimum turning radius. The vehicle management unit 35 reads the vehicle characteristic information held in the vehicle DB 81 and supplies the vehicle characteristic information to the vehicle state determination unit 36. Note that the vehicle DB 81 may store the driving state information from the driving state detection unit 32 and the peripheral environment information from the peripheral environment detection unit 34. In this case, the driving state information and the peripheral environment information are read from the vehicle DB 81 together with the vehicle characteristic information and supplied to the vehicle state determination unit 36.

The vehicle state determination unit 36 determines a dynamic state of the vehicle 11 on the basis of the driving state information supplied by the driving state detection unit 32 and the peripheral environment information supplied by the peripheral environment detection unit 34. Specifically, the vehicle state determination unit 36 determines at least one of the state of the passenger of the vehicle 11, the traveling state, the current position, the type of road on which the vehicle is traveling, or the state of the peripheral environment, as a dynamic state of the vehicle 11 that changes over time, on the basis of the driving state information and the peripheral environment information.

The vehicle state determination unit 36 also determines the vehicle characteristics as a static state of the vehicle 11 that does not change over time on the basis of the vehicle characteristic information supplied by the vehicle management unit 35. The vehicle state determination unit 36 calculates the required proficiency level Rp on the basis of at least one of the dynamic state or the static state of the vehicle 11.

Specifically, the vehicle state determination unit 36 calculates the required proficiency level Rp by, for example, multiplying a basic score of the required proficiency level Rp, which corresponds to the static state of the vehicle 11, by a correction factor corresponding to the dynamic state of the vehicle 11. Note that the basic score and the correction factor are set such that, as the difficulty of the remote monitoring becomes higher, the required proficiency level Rp becomes higher.

The remote monitoring apparatus 12 includes an operator management unit 91, a monitoring state determination unit 92, and a notification unit 93.

The operator management unit 91 includes an operator DB 101. The operator DB 101 holds operator characteristic information representing, as characteristics, the attributes of an operator who uses the remote monitoring apparatus 12, such as the number of years of automobile driving and years of remote monitoring experience, the ability to detect automobile abnormalities, the ability to avoid danger such as reaction speed, the ability to predict danger, and aptitude for driving such as physical strength and visual acuity. The operator management unit 91 reads the operator characteristic information held in the operator DB 101 and supplies the operator characteristic information to the monitoring state determination unit 92.

The monitoring state determination unit 92 determines the operator's proficiency state regarding the remote monitoring operation as a static state of the operator regarding the remote monitoring operation, which does not change over time, on the basis of the operator characteristic information supplied by the operator management unit 91. The monitoring state determination unit 92 calculates a proficiency level P representing a remote monitoring capability on the basis of the operator's proficiency state. Specifically, the monitoring state determination unit 92 calculates a proficiency level P by, for example, multiplying the basic score of the proficiency level P corresponding to the number of years of automobile driving of the operator by a correction factor corresponding to the operator's reaction speed. The monitoring state determination unit 92 supplies the proficiency level P to the management apparatus 13.

The notification unit 93 receives the assigned vehicle identification information from the management apparatus 13. On the basis of the assigned vehicle identification information, the notification unit 93 notifies the operator of a vehicle 11 identified by the assigned vehicle identification information, thus requesting the operator to perform an remote monitoring operation for that vehicle 11.

The management apparatus 13 (information processing apparatus) includes a proficiency level management unit 110, a determination unit 111, an assignment unit 112, and a monitoring state management unit 113.

The proficiency level management unit 110 includes a proficiency level DB 121. The proficiency level management unit 110 causes the proficiency level DB 121 to hold the proficiency level P of each operator supplied from the determination unit 111. The proficiency level management unit 110 updates the proficiency level P held in the proficiency level DB 121 on the basis of the result of the determination supplied by the determination unit 111. The proficiency level management unit 110 reads the proficiency level P held in the proficiency level DB 121 in response to a request from the determination unit 111 and supplies the proficiency level P to the determination unit 111.

The determination unit 111 receives the operator's proficiency level P from the monitoring state determination unit 92 of each remote monitoring apparatus 12 and supplies the proficiency level P to the proficiency level management unit 110. The determination unit 111 receives the required proficiency level Rp from the vehicle state determination unit 36 of each vehicle 11. When assigning an operator to a vehicle 11, the determination unit 111 requests the proficiency level P of each operator from the proficiency level management unit 110. On the basis of the proficiency level P supplied by the proficiency level management unit 110 in response to that request and the required proficiency level Rp of the vehicle 11 as an assignment target, the determination unit 111 determines whether or not each operator can perform a remote monitoring operation on that vehicle 11. The determination unit 111 supplies the result of the determination to the proficiency level management unit 110 and the assignment unit 112.

The assignment unit 112 assigns one operator to each vehicle 11 to remotely monitor that vehicle 11 on the basis of the result of the determination supplied by the determination unit 111. The assignment unit 112 supplies the result of the assignment to the monitoring state management unit 113. The assignment unit 112 requests, from the monitoring state management unit 113, an assignment table showing the correspondence relationship between each vehicle 11 and the operator assigned to that vehicle 11. On the basis of the assignment table supplied in response to the request, the assignment unit 112 transmits, to each remote monitoring apparatus 12, the assigned vehicle identification information of the operator who uses that remote monitoring apparatus 12.

The monitoring state management unit 113 includes a monitoring DB 131 that holds the assignment table. The monitoring state management unit 113 updates the assignment table held in the monitoring DB 131 on the basis of the result of the assignment supplied by the assignment unit 112. The monitoring state management unit 113 reads the assignment table from the monitoring DB 131 and supplies it to the assignment unit 112 in response to the request from the assignment unit 112.

<Example of Calculation of Required Proficiency Level>

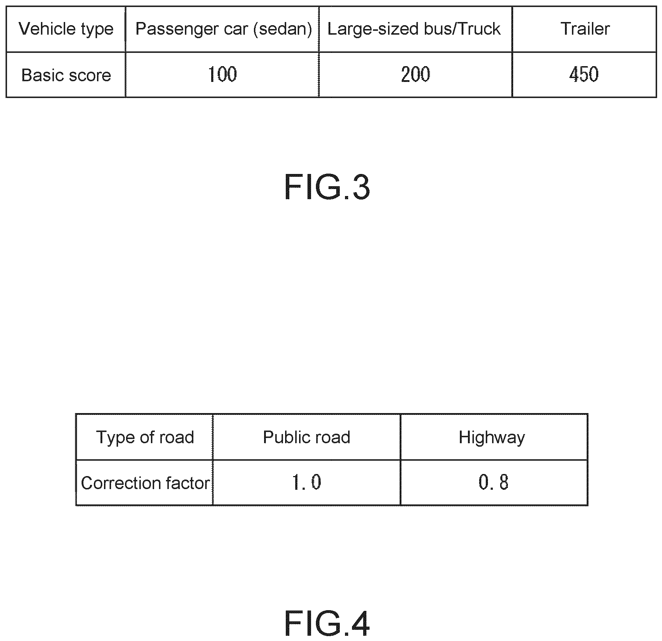

Referring to Figs. 3 to 6, an example of calculation of the required proficiency level Rp will be described.

Fig. 3 is a table showing an example of the relationship between the vehicle type as a static state of the vehicle 11 and the basic score of the required proficiency level Rp.

In the example in Fig. 3, if the vehicle type of the vehicle 11 is a passenger car (sedan), the basic score of the required proficiency level Rp is 100; if it is a large-sized bus or truck, the basic score is 200; and if it is a trailer, the basic score is 450.

Fig. 4 is a table showing an example of the relationship between the type of road on which the vehicle 11 is traveling as a dynamic state of the vehicle 11 and the correction factor for the required proficiency level Rp.

In the example in Fig. 4, if the type of road on which the vehicle 11 is traveling is a public road, the correction factor is 1.0; and if it is a highway, the correction factor is 0.8.

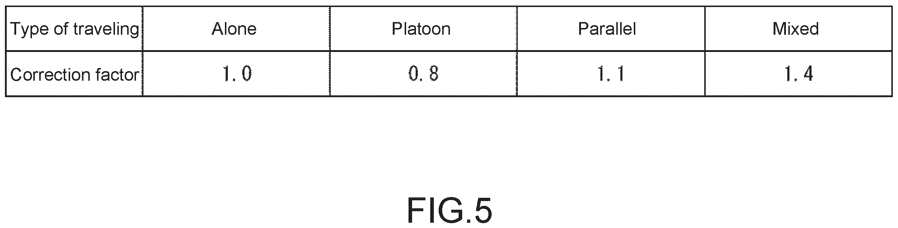

Fig. 5 is a table showing an example of the relationship between the type of traveling in the traveling state as a dynamic state of the vehicle 11 and the correction factor for the required proficiency level Rp.

In the example in Fig. 5, if the type of traveling of the vehicle 11 is traveling alone with no other vehicles around, the correction factor is 1.0; and if it is platoon traveling with other vehicles vertically aligned, the correction factor is 0.8. If the type of traveling of the vehicle 11 is parallel traveling with other vehicles aligned side by side, the correction factor is 1.1; and if it is mixed traveling (free traveling) in which many vehicles freely come and go, the correction factor is 1.4.

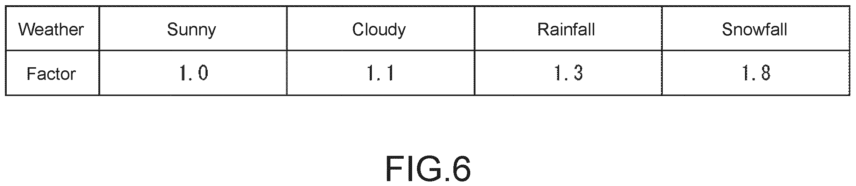

Fig. 6 is a table showing an example of the relationship between the weather in the state of the peripheral environment as a dynamic state of the vehicle 11 and the correction factor for the required proficiency level Rp.

In the example in Fig. 6, if the weather is sunny, the correction factor is 1.0; if the weather is cloudy, the correction factor is 1.1. If the weather is rainfall, the correction factor is 1.3, and if the weather is snowfall, the correction factor is 1.8.

If the basic score is set as shown in Fig. 3 and the correction factors are set as shown in Figs. 4 to 6, when the vehicle 11, whose vehicle type is a passenger car, is traveling parallel on a public road during snowfall, the vehicle state determination unit 36 calculates 198 (= 100 x 1.0 x 1.1 x 1.8) as the required proficiency level Rp. When the vehicle 11, whose vehicle type is a large-sized bus, is traveling alone on a highway in sunny weather, the vehicle state determination unit 36 calculates 160 (= 200 x 0.8 x 1.0 x 1.0) as the required proficiency level Rp. Therefore, in this case, the required proficiency level Rp of the vehicle 11, which is a passenger car, is higher than the required proficiency level Rp of the vehicle 11, which is a large-sized bus. In other words, the vehicle 11 as a passenger car is determined to be more difficult to be remotely monitored than the vehicle 11 as a large-sized bus, and a higher proficiency level is required of the operator in charge of the remote monitoring operation.

As described above, the vehicle state determination unit 36 calculates the required proficiency level Rp on the basis of the state of the vehicle 11, so that the required proficiency level Rp appropriate for the state of the vehicle 11 can be calculated.

Note that the method of calculating the required proficiency level Rp is not limited to the method described with reference to Figs. 3 to 6. For example, the required proficiency level Rp may be calculated by adding up the peripheral environment information in all the routes to be remotely monitored. In this case, the peripheral environment information of other vehicles 11 are also referenced to, if necessary.

<Example of Calculation of Proficiency Level>

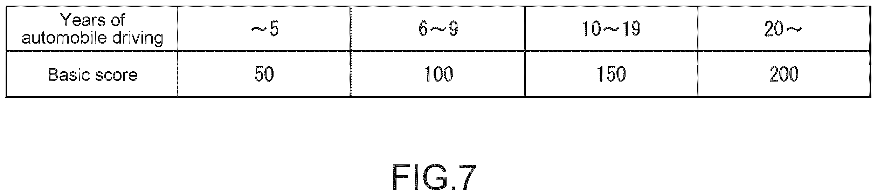

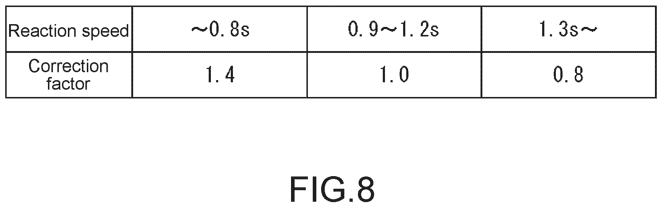

Referring to Figs. 7 and 8, an example of calculation of the proficiency level P will be described.

Fig. 7 is a table showing an example of the relationship between the number of years of automobile driving of the operator and the basic score of the proficiency level P.

In the example in Fig. 7, if the operator has driven an automobile for 5 years or less, the basic score is 50; and if the operator has driven an automobile for 6 to 9 years, the basic score is 100. If the operator has driven an automobile for 10 to 19 years, the basic score is 150; and if the operator has driven an automobile for 20 years or more, the basic score is 200.

Fig. 8 is a table showing an example of the relationship between the operator's reaction speed and the correction factor for the proficiency level P.

In the example in Fig. 8, the operator's reaction speed is expressed in terms of the time between the detection of an obstacle or hazardous object ahead and the operator's braking operation. If the operator's reaction time is 0.8 seconds or less, the correction factor is 1.4; if it is between 0.9 seconds and 1.2 seconds, the correction factor is 1.0; and if it is 1.3 seconds or more, the correction factor is 0.8.

If the basic score is set as shown in Fig. 7 and the correction factor is set as shown in Fig. 8, when the number of years of automobile driving of the operator is 8 years and the reaction time is 1.0 second, the monitoring state determination unit 92 calculates 100 (= 100 x 1.0) as the proficiency level P. If the number of years of automobile driving is 15 years and the reaction time is 1.4 seconds, the monitoring state determination unit 92 calculates 120 (= 150 x 0.8) as the proficiency level P. Therefore, in this case, the proficiency level P of the operator with the number of years of automobile driving of 15 years and the reaction time of 1.4 seconds is higher than the proficiency level P of the operator with the number of years of automobile driving of 8 years and the reaction time of 1.0 second.

As described above, the monitoring state determination unit 92 calculates the proficiency level P on the basis of the state of the operator, so that the proficiency level P appropriate for the state of the operator can be calculated.

<First Example of Assignment>

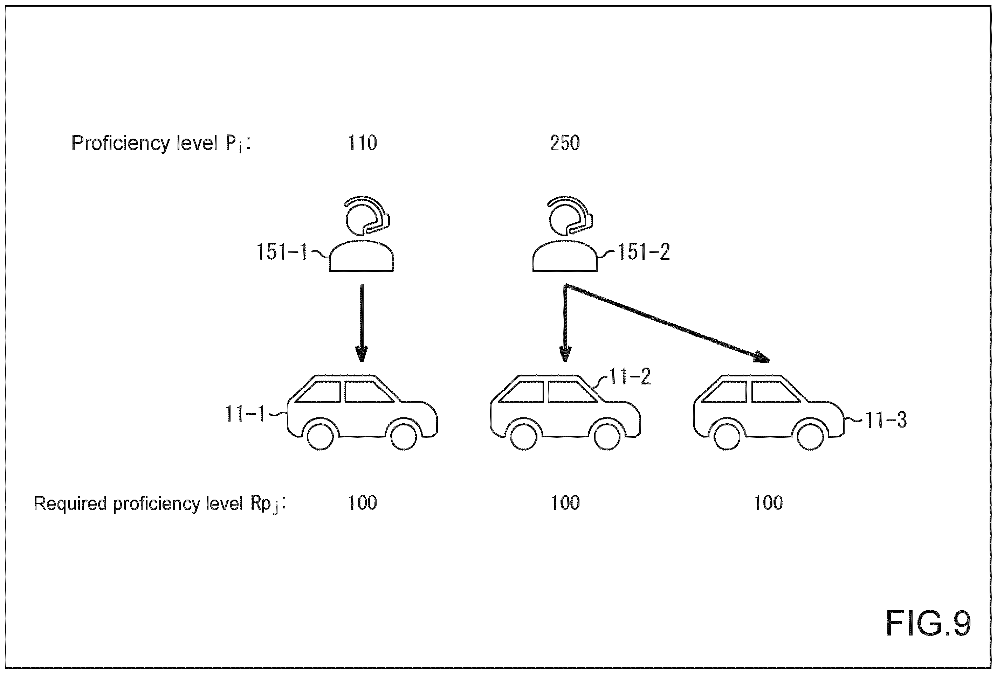

Fig. 9 is a diagram for describing a first example of assignment by the management apparatus 13.

In the example in Fig. 9, the management apparatus 13 assigns three vehicles 11-1 to 11-3 that need to be remotely monitored to two operators 151-1 and 151-2 who use two remote monitoring apparatuses 12-1 and 12-2, respectively. Note that, in the following, if there is no need to distinguish between the operators 151-1 to 151-M who use the remote monitoring apparatuses 12-1 to 12-M, respectively, they are collectively referred to as the operator 151. The proficiency level P of an operator 151-i (i is an integer between 1 and M) is referred to as $P_i$, and the required proficiency level Rp of the j-th (j is an integer between 1 and L) vehicle is referred to as $Rp_j$.

In the example in Fig. 9, the proficiency level $P_1$ of the operator 151-1 is 110 and the proficiency level $P_2$ of the operator 151-2 is 250. The required proficiency levels $Rp_1$ to $Rp_3$ of the three vehicles 11-1 to 11-3 are all 100.

First, the determination unit 111 of the management apparatus 13 sets, for example, the vehicle 11-1 as an assignment target, requests the proficiency level $P_1$, which is held in the proficiency level DB 121, from the proficiency level management unit 110 to acquire the proficiency level $P_1$. The determination unit 111 compares this proficiency level $P_1$ with the required proficiency level $Rp_1$ of the vehicle 11-1.

In the example in Fig. 9, since the proficiency level $P_1$ is equal to or greater than the required proficiency level $Rp_1$, the determination unit 111 determines that the operator 151-1 can perform a remote monitoring operation on the vehicle 11-1. The determination unit 111 supplies the result of the determination to the proficiency level management unit 110 and the assignment unit 112. The assignment unit 112 assigns the operator 151-1 to the vehicle 11-1 on the basis of the result of this determination. On the basis of the result of the determination, the proficiency level management unit 110 updates the proficiency level $P_1$ held in the proficiency level DB 121 to the value obtained by subtracting the required proficiency level $Rp_1$ from that proficiency level $P_1$. As a result, the updated proficiency level $P_1$ is 10 (= 110 - 100).

Next, the determination unit 111 sets, for example, the vehicle 11-2 as an assignment target, and requests the updated proficiency level $P_1$, which is held in the proficiency level DB 121, from the proficiency level management unit 110 to acquire the updated proficiency level $P_1$. The determination unit 111 compares this proficiency level $P_1$ with the required proficiency level $Rp_2$ of the vehicle 11-2.

In the example in Fig. 9, since the proficiency level $P_1$ is not equal to or greater than the required proficiency level $Rp_2$, the determination unit 111 determines that the operator 151-1 cannot perform a remote monitoring operation on the vehicle 11-2. The determination unit 111 supplies the result of the determination to the proficiency level management unit 110 and the assignment unit 112. The assignment unit 112 does not assign the operator 151-1 to the vehicle 11-2, and the proficiency level management unit 110 does not update the proficiency level $P_1$.

Since an operator 151 has not yet been assigned to the vehicle 11-2, the determination unit 111 requests the proficiency level $P_2$ of the operator 151-2 from the proficiency level management unit 110. In response to this request, the proficiency level management unit 110 reads the proficiency level $P_2$ held in the proficiency level DB 121 and supplies the proficiency level $P_2$ to the determination unit 111. The determination unit 111 compares this proficiency level $P_2$ with the required proficiency level $Rp_2$ of the vehicle 11-2.

In the example in Fig. 9, since the proficiency level $P_2$ is equal to or greater than the required proficiency level $Rp_2$, the determination unit 111 determines that the operator 151-2 can perform a remote monitoring operation on the vehicle 11-2. The determination unit 111 supplies the result of the determination to the proficiency level management unit 110 and the assignment unit 112. The assignment unit 112 assigns the operator 151-2 to the vehicle 11-2 on the basis of the result of this determination. On the basis of the result of the determination, the proficiency level management unit 110 updates the proficiency level $P_2$ held in the proficiency level DB 121 to the value obtained by subtracting the required proficiency level $Rp_2$ from the proficiency level $P_2$. As a result, the updated proficiency level $P_2$ is 150 (= 250 - 100).

Next, the determination unit 111 sets, for example, the vehicle 11-3 as an assignment target, and similarly to the case where the vehicle 11-2 is sets as an assignment target, compares the proficiency level $P_1$ with the required proficiency level $Rp_3$ of the vehicle 11-3. In the example in Fig. 9, since the proficiency level $P_1$ is not equal to or greater than the required proficiency level $Rp_3$, the determination unit 111 determines that the operator 151-1 cannot perform a remote monitoring operation on the vehicle 11-3. The determination unit 111 supplies the result of the determination to the proficiency level management unit 110 and the assignment unit 112. The assignment unit 112 does not assign the operator 151-1 to the vehicle 11-3, and the proficiency level management unit 110 does not update the proficiency level $P_1$.

Since an operator 151 has not yet been assigned to the vehicle 11-3, similarly to the case where the vehicle 11-2 is sets as an assignment target, the determination unit 111 compares the updated proficiency level $P_2$ with the required proficiency level $Rp_3$. In the example in Fig. 9, since the updated proficiency level $P_2$ is equal to or greater than the required proficiency level $Rp_3$, the determination unit 111 determines that the operator 151-2 can perform a remote monitoring operation on the vehicle 11-3. The determination unit 111 supplies the result of the determination to the proficiency level management unit 110 and the assignment unit 112. The assignment unit 112 assigns the operator 151-2 to the vehicle 11-3 on the basis of the result of this determination. On the basis of the result of the determination, the proficiency level management unit 110 updates the proficiency level $P_2$ held in the proficiency level DB 121 to the value obtained by subtracting the required proficiency level $Rp_3$ from the proficiency level $P_2$. As a result, the proficiency level $P_2$ held in the proficiency level DB 121 is 50 (= 150 - 100).

As described above, if the proficiency level $P_2$ of one operator 151-2 is equal to or greater than the sum of the required proficiency levels $Rp_2$ and $Rp_3$, the assignment unit 112 assigns one operator 151-2 to the two vehicles 11-2 and 11-3.

<Second Example of Assignment>

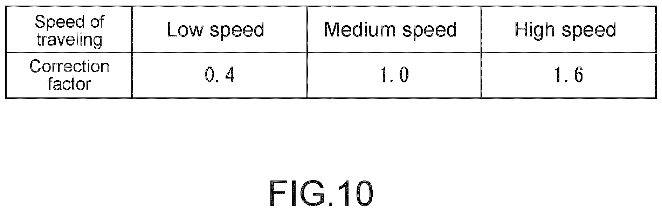

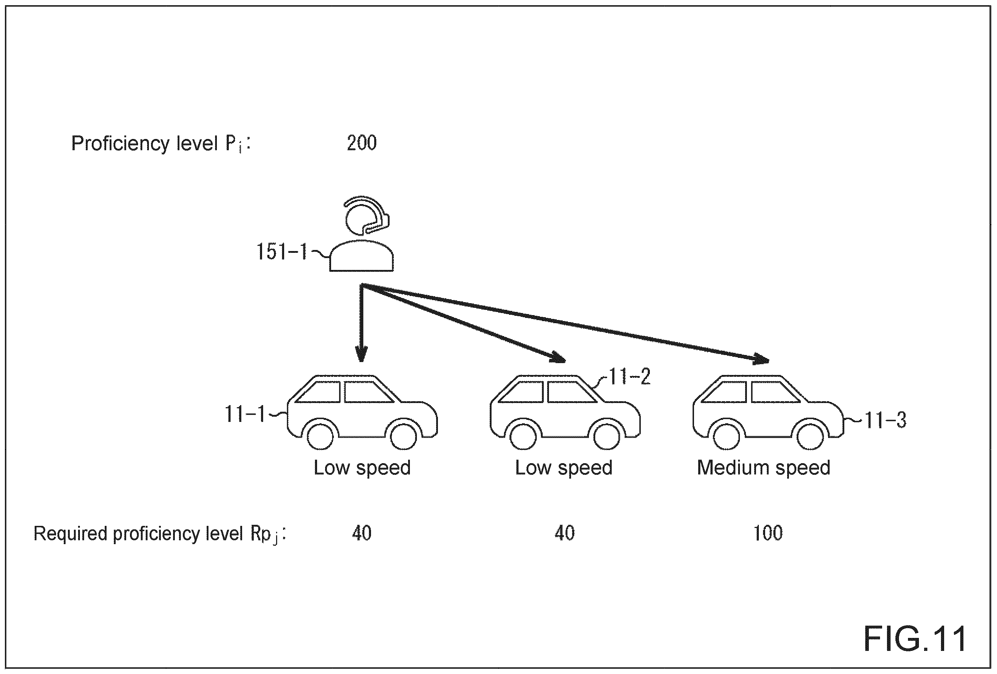

Referring to Figs. 10 and 11, a second example of assignment by the management apparatus 13 will be described.

Fig. 10 is a table showing an example of the relationship between the speed of traveling in the traveling state as a dynamic state of the vehicle 11 and the correction factor for the required proficiency level Rp.

In the example in Fig. 10, if the vehicle 11 is traveling at low speed, the correction factor is 0.4; if the vehicle 11 is traveling at medium speed, the correction factor is 1.0; and if the vehicle 11 is traveling at high speed, the correction factor is 1.6.

Fig. 11 is a diagram for describing an example of assignment by the management apparatus 13 while using the required proficiency level Rp, which is determined by correcting the basic score in Fig. 3 using the correction factor in Fig. 10.

In the example in Fig. 11, the management apparatus 13 assigns three vehicles 11-1 to 11-3 that need to be remotely monitored to one operator 151-1. The proficiency level $P_1$ of the operator 151-1 is 200. The vehicle type of the vehicles 11-1 and 11-2 is a passenger car, and the speed of traveling is low. Therefore, the required proficiency level $Rp_1$ of the vehicle 11-1 and the required proficiency level $Rp_2$ of the vehicle 11-2 are both 40 (= 100 x 0.4). The vehicle type of the vehicle 11-3 is a passenger car, and the speed of traveling is medium. Therefore, the required proficiency level $Rp_3$ is 100 (= 100 x 1.0).

First, the determination unit 111 of the management apparatus 13 sets, for example, the vehicle 11-1 as an assignment target, and requests the proficiency level $P_1$, which is held in the proficiency level DB 121, from the proficiency level management unit 110 to acquire the proficiency level $P_1$. The determination unit 111 compares this proficiency level $P_1$ with the required proficiency level $Rp_1$ of the vehicle 11-1.

In the example in Fig. 11, since the proficiency level $P_1$ is equal to or greater than the required proficiency level $Rp_1$, the determination unit 111 determines that the operator 151-1 can perform a remote monitoring operation on the vehicle 11-1. The determination unit 111 supplies the result of the determination to the proficiency level management unit 110 and the assignment unit 112. The assignment unit 112 assigns the operator 151-1 to the vehicle 11-1 on the basis of the result of this determination. On the basis of the result of the determination, the proficiency level management unit 110 updates the proficiency level $P_1$ held in the proficiency level DB 121 to the value obtained by subtracting the required proficiency level Rp from that proficiency level $P_1$. As a result, the proficiency level $P_1$ to be held in the proficiency level DB 121 is 160 (= 200 - 40).

Next, the determination unit 111 sets, for example, the vehicle 11-2 as an assignment target, and requests the updated proficiency level $P_1$, which is held in the proficiency level DB 121, from the proficiency level management unit 110 to acquire the updated proficiency level $P_1$. The determination unit 111 compares this proficiency level $P_1$ with the required proficiency level $Rp_2$ of the vehicle 11-2.

In the example in Fig. 11, since the proficiency level $P_1$ is equal to or greater than the required proficiency level $Rp_2$, the determination unit 111 determines that the operator 151-1 can perform a remote monitoring operation on the vehicle 11-2. The determination unit 111 supplies the result of the determination to the proficiency level management unit 110 and the assignment unit 112. The assignment unit 112 assigns the operator 151-1 to the vehicle 11-2 on the basis of the result of this determination. On the basis of the result of the determination, the proficiency level management unit 110 updates the proficiency level $P_1$ held in the proficiency level DB 121 to the value obtained by subtracting the required proficiency level $Rp_2$ from the proficiency level $P_1$. As a result, the proficiency level $P_1$ to be held in the proficiency level DB 121 is 120 (= 160 - 40).

Next, the determination unit 111 sets, for example, the vehicle 11-3 as an assignment target, and requests the updated proficiency level $P_1$, which is held in the proficiency level DB 121, from the proficiency level management unit 110 to acquire the updated proficiency level $P_1$. The determination unit 111 compares this proficiency level $P_1$ with the required proficiency level $Rp_3$ of the vehicle 11-3.

In the example in Fig. 11, since the proficiency level $P_1$ is equal to or greater than the required proficiency level $Rp_3$, the determination unit 111 determines that the operator 151-1 can perform a remote monitoring operation on the vehicle 11-3. The determination unit 111 supplies the result of the determination to the proficiency level management unit 110 and the assignment unit 112. The assignment unit 112 assigns the operator 151-1 to the vehicle 11-3 on the basis of the result of the determination. The proficiency level management unit 110 updates the proficiency level $P_1$ held in the proficiency level DB 121 to the value obtained by subtracting the required proficiency level $Rp_3$ from the proficiency level $P_1$. As a result, the proficiency level $P_1$ to be held in the proficiency level DB 121 is 20 (= 120 - 100).

As described above, if the proficiency level $P_1$ of one operator 151-1 is equal to or greater than the sum of the required proficiency levels $Rp_1$ to $Rp_3$, the assignment unit 112 assigns one operator 151-1 to the three vehicles 11-1 to 11-3.

<Description of Assignment Processing>

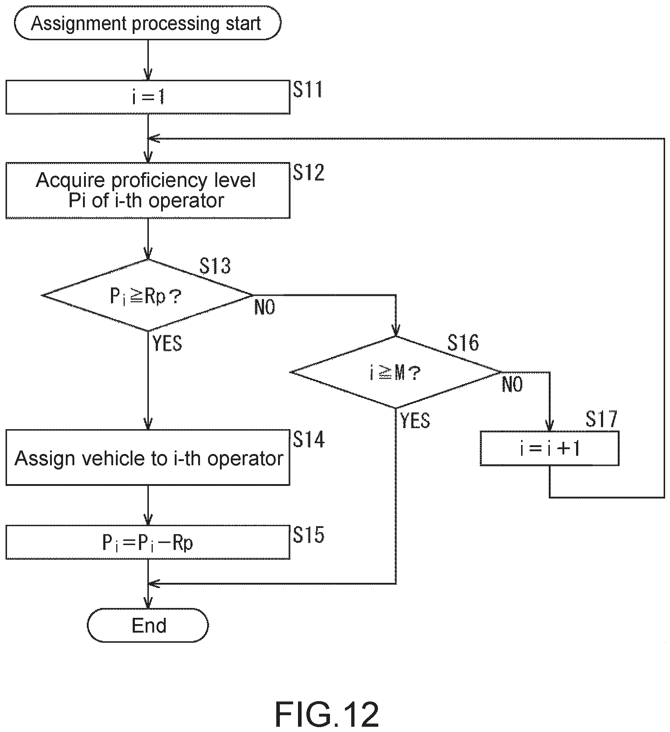

Fig. 12 is a flowchart for describing the assignment processing by the management apparatus 13. This assignment processing is performed, for example, with each vehicle 11 that needs to be remotely monitored being as an assignment target.

In Step S11 of Fig. 12, the determination unit 111 sets i to 1. In Step S12, the determination unit 111 requests the proficiency level $P_i$ of the i-th operator 151-i from the proficiency level management unit 110 and acquires the proficiency level $P_i$.

In Step S13, the determination unit 111 determines whether or not the proficiency level $P_i$ is equal to or greater than the required proficiency level Rp of the vehicle 11 as an assignment target. If it is determined in Step S13 that the

proficiency level $P_i$ is equal to or greater than the required proficiency level Rp, the determination unit 111 determines that the operator 151-i can perform a remote monitoring operation on the vehicle 11 as an assignment target. The determination unit 111 supplies the result of the determination to the proficiency level management unit 110 and the assignment unit 112.

Subsequently, in Step S14, the assignment unit 112 assigns the vehicle 11 as an assignment target to the i-th operator 151-i on the basis of the result of the determination from the determination unit 111. The assignment unit 112 supplies the result of the assignment to the monitoring state management unit 113. Thus, the assignment table held in the monitoring DB 131 is updated. As a result, the assigned vehicle identification information for identifying the vehicle 11 as an assignment target is transmitted to the remote monitoring apparatus 12-i used by the operator 151-i. Accordingly, the operator 151-i performs a remote monitoring operation on this vehicle 11.

In Step S15, the proficiency level management unit 110 updates the proficiency level $P_i$ held in the proficiency level DB 121 to the value obtained by subtracting the required proficiency level Rp of the vehicle 11 as an assignment target from the proficiency level $P_i$. The processing is then terminated.

On the other hand, if it is determined in Step S13 that the proficiency level $P_i$ is not equal to or greater than the required proficiency level Rp, the determination unit 111 determines that the operator 151-i cannot perform a remote monitoring operation on the vehicle 11 as an assignment target. The determination unit 111 supplies the result of the determination to the proficiency level management unit 110 and the assignment unit 112.

Subsequently, in Step S16, the determination unit 111 determines whether i is equal to or greater than the total number M of operators 151. If it is determined in Step S16 that i is not equal to or greater than the total number M of operators 151, the processing proceeds to Step S17. In Step S17, the determination unit 111 increments i by 1, returns the processing to Step S12, and repeats the processing thereafter.

On the other hand, if it is determined in Step S16 that i is equal to or greater than the total number M of operators 151, that is, if the processing of Steps S12 and S13 have been performed for the proficiency levels P of all the operators 151, the processing is terminated. In this case, none of the operators 151 is assigned to the vehicle 11 as an assignment target.

Note that the assignment processing in Fig. 12 is redone when the vehicle 11 that needs to be remotely monitored or the required proficiency level Rp changes. This makes it possible to prevent the assignment situation from deteriorating and interfering with remote monitoring when the vehicle 11 that needs to be remotely monitored or the required proficiency level Rp changes.

In the assignment processing in Fig. 12, the order of assignment of the operators 151 may be the same for all assignment targets or may be different for each assignment target. The order of assignment of the operators 151 may be set, for example, in descending or ascending order of the proficiency level P.

As described above, the management system 10 determines the states of the plurality of vehicles 11 to be remotely monitored and the static states of the plurality of operators 151 regarding their remote monitoring operations, and on the basis of those states, assigns one operator 151 to each of the plurality of vehicles 11 to remotely monitor that vehicle 11. Thus, an appropriate operator 151 can be assigned to a vehicle 11 on the basis of both the state of the vehicle 11 and the state of the operator 151. As a result, an operator 151 without remote monitoring capability necessary for the remote monitoring operation of a vehicle 11 is not assigned to that vehicle 11, and a satisfactory remote monitoring operation is performed.

In contrast to the above, if assignment is not performed on the basis of the state of the vehicle 11 and the state of the operator 151, an operator 151 without remote monitoring capability necessary for the remote monitoring operation of the vehicle 11 may be assigned to the vehicle 11. Specifically, the difficulty level of remote monitoring of the vehicle 11 varies depending on the state of the vehicle 11, and the remote monitoring capability of the operator 151 varies depending on the state of the operator 151. Therefore, if an operator 151 is assigned to a vehicle 11 without consideration of the state of the vehicle 11 and the state of the operator 151, an appropriate operator 151 may not be assigned to the vehicle 11.

Further, if the proficiency level P of one operator 151 is equal to or greater than the sum of the required proficiency levels Rp of a plurality of vehicles 11, the management system 10 assigns one operator 151 to the plurality of vehicles 11. Therefore, compared to the case where only one vehicle 11 is assigned to one operator 151, many vehicles 11 can be remotely monitored with fewer operators 151. As a result, the shortage of operators 151 can be suppressed, and the remote monitoring operation can be stably carried out.

In contrast to the above, if only one vehicle 11 is assigned to one operator 151, the same number of operators 151 as the number of drivers when the vehicles 11 are normally driven are required in the remote monitoring operations for the vehicles 11.

<Second Embodiment>

<Configuration Example of Management System>

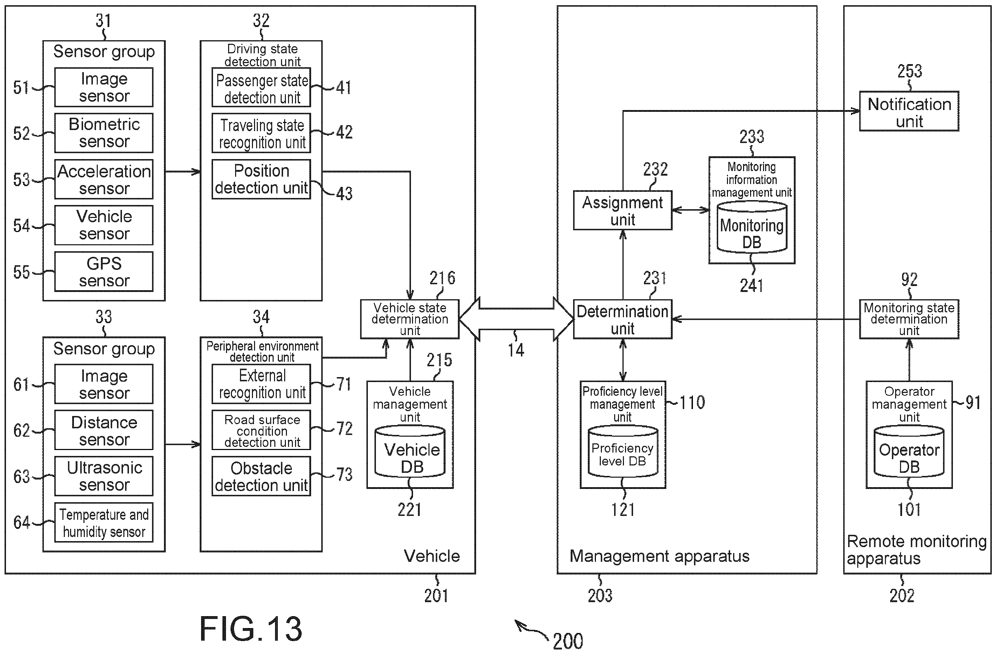

Fig. 13 is a block diagram showing a configuration example of a second embodiment of a management system as an information processing system to which the present technology is applied.

In a management system 200 shown in Fig. 13, the portions corresponding to the management system 10 in Fig. 2 are denoted by the same reference symbols. Therefore, the description of those portions will be omitted as appropriate, and the description will focus on the portions that differ from the management system 10. The management system 200 differs from the management system 10 in that one operator is assigned to each of one or more parts of one or more vehicles, and is otherwise configured in the same manner as the management system 10.

Specifically, the management system 200 includes a vehicle 201 and a management apparatus 203 that are connected via a network 14, the management apparatus 203 being connected to a remote monitoring apparatus 202. The vehicle 201 differs from the vehicle 11 in Fig. 2 in that the vehicle 201 includes a vehicle management unit 215 and a vehicle state determination unit 216 instead of the vehicle management unit 35 and the vehicle state determination unit 36, and is otherwise configured in the same manner as the vehicle 11.

The vehicle management unit 215 includes a vehicle DB 221. The vehicle DB 221 holds vehicle characteristic information similarly to the vehicle 11. The vehicle DB 221 also holds part ratio information representing the ratio of remote monitoring operations for each part (e.g., front, side, rear, driver, cargo area, etc.) to the remote monitoring operations for the entire vehicle 201. The vehicle management unit 215 reads the vehicle characteristic information and the part ratio information held in the vehicle DB 221 and supplies the vehicle characteristic information and the part ratio information to the vehicle state determination unit 216. Note that the vehicle DB 221 may store the driving state information and the peripheral environment information similarly to the vehicle 11.

Similarly to the vehicle state determination unit 36, the vehicle state determination unit 216 determines a dynamic state of the vehicle 201 on the basis of the driving state information and the peripheral environment information, and determines a static state of the vehicle 201 on the basis of the vehicle characteristic information. Similarly to the vehicle state determination unit 36, the vehicle state determination unit 216 calculates a required proficiency level $Rp$ on the basis of at least one of the dynamic state or the static state of the vehicle 201.

The vehicle state determination unit 216 divides the required proficiency level $Rp$ into part required proficiency levels $Rpp$, which are the required proficiency levels of the respective parts of the vehicle 11, on the basis of the part ratio information supplied by the vehicle management unit 215. Note that, in the following, when it is necessary to distinguish the part required proficiency levels $Rpp$ of the respective parts individually, the part required proficiency level $Rpp$ of the t-th part (t is an integer equal to or greater than 1) is referred to as $Rppt$. The vehicle state determination unit 216 transmits each part required proficiency level $Rpp$ to the management apparatus 203 via the network 14.

The remote monitoring apparatus 202 differs from the remote monitoring apparatus 12 in Fig. 2 in that the remote monitoring apparatus 202 includes a notification unit 253 instead of the notification unit 93, and is otherwise configured in the same manner as the remote monitoring apparatus 12.

The notification unit 253 receives, from the management apparatus 203, assigned part identification information for identifying the part of the vehicle 201 assigned to an operator 151 who uses that remote monitoring apparatus 202. On the basis of the assigned part identification information, the notification unit 253 notifies the operator 151 of the part of the vehicle 201 identified by the assigned part identification information, thus requesting the operator 151 to perform an remote monitoring operation on that part of the vehicle 201.

The management apparatus 203 (information processing apparatus) differs from the management apparatus 13 in Fig. 2 in that the management apparatus 203 includes a determination unit 231, an assignment unit 232, and a monitoring state management unit 233 instead of the determination unit 111, the assignment unit 112, and the monitoring state management unit 113, and is otherwise configured in the same manner as the management apparatus 13.

Similarly to the determination unit 111, the determination unit 231 receives the proficiency level $P$ of each operator 151 and supplies the proficiency level $P$ to the proficiency level management unit 110. The determination unit 231 receives the part required proficiency level $Rpp$ of each part of the vehicle 201 from the vehicle state determination unit 216 of each vehicle 201. When assigning an operator 151 to each part of the vehicle 201, the determination unit 231 requests the proficiency level $P$ of each operator from the proficiency level management unit 110. On the basis of the proficiency level $P$ supplied by the proficiency level management unit 110 in response to that request and the part required proficiency level $Rpp$ of the part of the vehicle 201 as an assignment target, the determination unit 231 determines whether or not each operator 151 can perform a remote monitoring operation on that part. The determination unit 231 supplies the result of the determination to the proficiency level management unit 110 and the assignment unit 232.

The assignment unit 232 assigns one operator 151 to each part of each vehicle 201 to remotely monitor that part, on the basis of the result of the determination supplied by the determination unit 231. The assignment unit 232 supplies the result of the assignment to the monitoring state management unit 233. The assignment unit 232 requests, from the monitoring state management unit 233, a part assignment table showing the correspondence between each part of each vehicle 11 and the operator 151 assigned to that part. On the basis of the part assignment table supplied in response to the request, the assignment unit 232 transmits, to each remote monitoring apparatus 202, the assigned part identification information of the operator who uses that remote monitoring apparatus 202.

The monitoring state management unit 233 includes a monitoring DB 241 that holds the part assignment table. The monitoring state management unit 233 updates the part assignment table held in the monitoring DB 241 on the basis of the result of the assignment supplied by the assignment unit 232. The monitoring state management unit 233 reads the part assignment table from the monitoring DB 241 and supplies it to the assignment unit 232 in response to the request from the assignment unit 232.

<Example of Assignment>

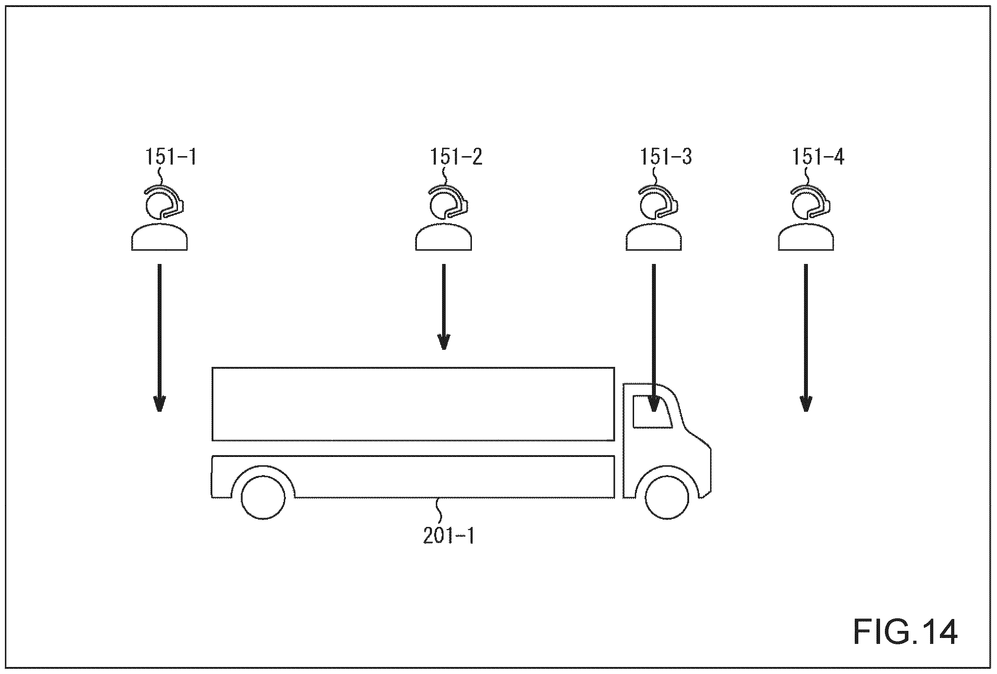

Fig. 14 is a diagram for describing an example of assignment by the management apparatus 203.

In the example in Fig. 14, the management apparatus 203 respectively assigns the front, rear, driver, and cargo area of one vehicle 201-1 that need to be remotely monitored to four operators 151-1 and 151-4 who use four remote monitoring apparatuses 202-1 to 202-4, respectively. In this way, the management apparatus 203 divides the vehicle 201 into parts for assignment, thus allowing the plurality of operators 151 to be assigned to one vehicle 201.

<Description of Assignment Processing>

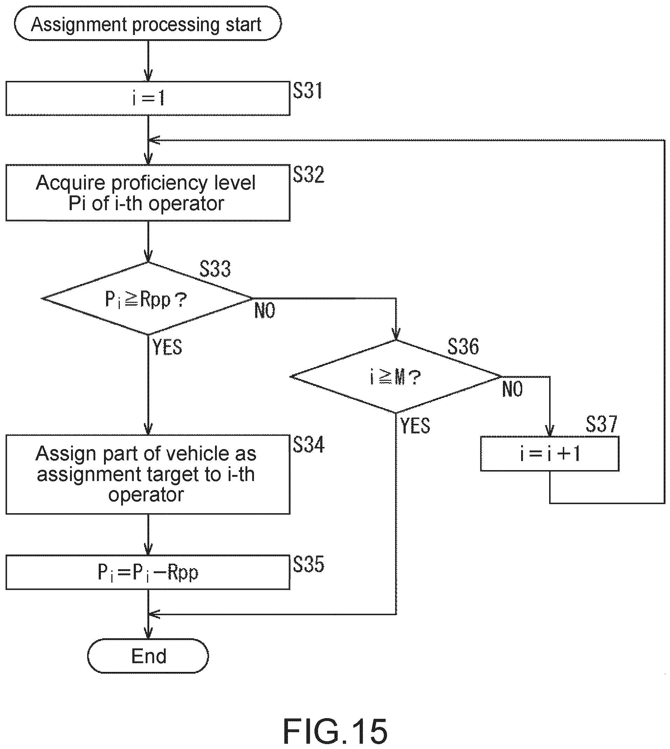

Fig. 15 is a flowchart for describing the assignment processing by the management apparatus 203. This assignment processing is performed, for example, with each part of each vehicle 201 that needs to be remotely monitored being as an assignment target.

The processing in Steps S31 and S32 in Fig. 15 are similar to the processing in Steps S11 and S12 in Fig. 12, and thus description thereof will be omitted.

In Step S33, the determination unit 231 determines whether or not the proficiency level $P_i$ is equal to or greater than the part required proficiency level Rpp of the part as an assignment target. If it is determined in Step S33 that the proficiency level $P_i$ is equal to or greater than the part required proficiency level Rpp, the determination unit 231 determines that the operator 151-i can perform a remote monitoring operation on the part of the vehicle 201 as an assignment target. The determination unit 231 supplies the result of the determination to the proficiency level management unit 110 and the assignment unit 232.

Subsequently, in Step S34, the assignment unit 232 assigns the part of the vehicle 201 as an assignment target to the i-th operator 151-i on the basis of the result of the determination from the determination unit 231. The assignment unit 232 supplies the result of the assignment to the monitoring state management unit 233. Thus, the part assignment table held in the monitoring DB 241 is updated. As a result, the assigned part identification information for identifying the part of the vehicle 201 as an assignment target is transmitted to a remote monitoring apparatus 202-i used by the operator 151-i. Accordingly, the operator 151-i performs a remote monitoring operation on this part of the vehicle 201.

In Step S35, the proficiency level management unit 110 updates the proficiency level $P_i$ held in the proficiency level DB 121 to the value obtained by subtracting the part required proficiency level Rpp of the part as an assignment target from the proficiency level $P_i$. The processing is then terminated.

On the other hand, if it is determined in Step S33 that the proficiency level $P_i$ is not equal to or greater than the part required proficiency level Rpp, the determination unit 231 determines that the operator 151-i cannot perform a remote monitoring operation on the part as an assignment target. The determination unit 231 supplies the result of the determination to the proficiency level management unit 110 and the assignment unit 232.

Subsequently, in Step S36, the determination unit 231 determines whether i is equal to or greater than the total number M of operators 151. If it is determined in Step S36 that i is not equal to or greater than the total number M of operators 151, in Step S37, the determination unit 231 increments i by 1, returns the processing to Step S32, and repeats the processing thereafter.

On the other hand, if it is determined in Step S36 that i is equal to or greater than the total number M of operators 151, that is, if the processing in Steps S32 and S33 have been performed for the proficiency levels P of all the operators 151, the processing is terminated. In this case, none of the operators 151 is assigned to the part as an assignment target.

If the above assignment processing is performed for all the parts of the vehicle 201, the assignment of the operators 151 who remotely monitor the entire vehicle 201 is completed. Note that the assignment processing in Fig. 15 is redone when the vehicle 201 that needs to be remotely monitored or the part required proficiency level Rpp changes. This makes it possible to prevent the assignment situation from deteriorating and interfering with remote monitoring when the vehicle 201 that needs to be remotely monitored or the part required proficiency level Rpp changes.

In the assignment processing in Fig. 15, the order of assignment of the operators 151 may be the same for all assignment targets or may be different for each assignment target. The order of assignment of the operators 151 may be set, for example, in descending or ascending order of the proficiency level P.

As described above, the management system 200 determines the states of the plurality of vehicles 201 to be remotely monitored and the static states of the plurality of operators 151 regarding their remote monitoring operations, and on the basis of those states, assigns one operator 151 to each part of the plurality of vehicles 201 to remotely monitor that part. Thus, one appropriate operator can be assigned to each part of the vehicle 201 on the basis of both the state of the vehicle 201 and the state of the operator 151. As a result, an operator 151 without remote monitoring capability necessary for remote monitoring for that part is not assigned to each part of the vehicle 201, and a satisfactory remote monitoring operation is performed.

Further, the remote monitoring operation for one vehicle 201 can be shared by the plurality of operators 151 for each part of the vehicle. Therefore, even if the required proficiency level Rp of a vehicle 201 to be remotely monitored is large and there is no operator 151 corresponding to a proficiency level P equal to or greater than the required proficiency level Rp, operators 151 can be assigned to that vehicle 201. It is also possible to assign a vehicle 201 to an operator 151 with a low proficiency level P. This allows for flexible remote monitoring.

If the proficiency level P of one operator 151 is equal to or greater than the sum of the part required proficiency levels Rpp of a plurality of parts, the management system 200 also assigns one operator 151 to the plurality of parts. Therefore, compared to the case where only one part is assigned to one operator 151, many parts can be remotely monitored with fewer operators 151. As a result, the shortage of operators 151 can be suppressed, and the remote monitoring operation can be stably carried out.

<Third Embodiment>

<Configuration Example of Management System>

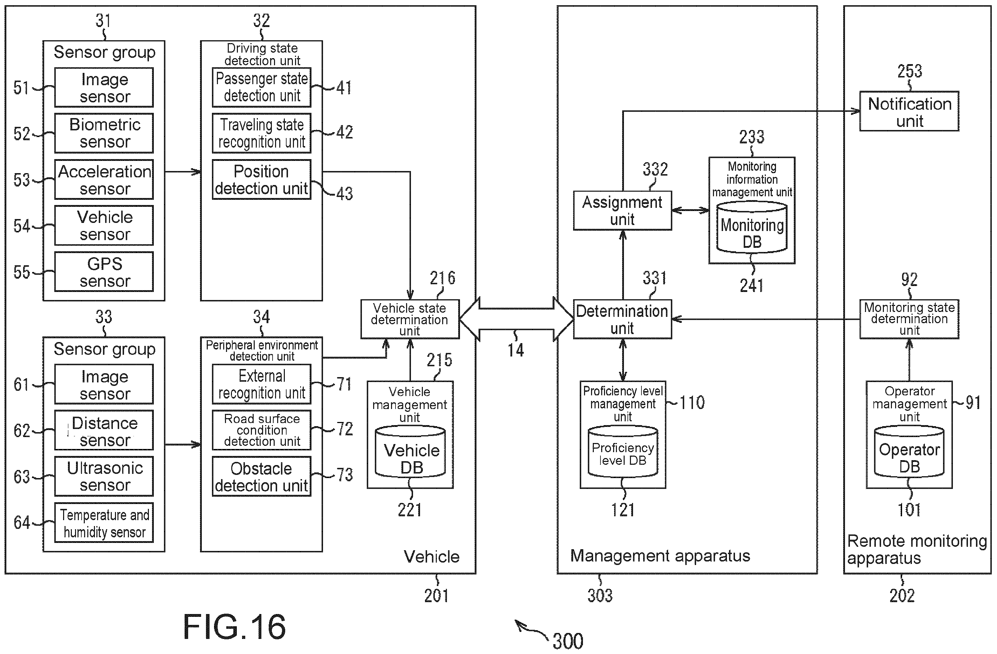

Fig. 16 is a block diagram showing a configuration example of a third embodiment of a management system as an information processing system to which the present technology is applied.

In a management system 300 shown in Fig. 16, the portions corresponding to the management system 200 in Fig. 13 are demoted by the same reference symbols. Therefore, the description of those portions will be omitted as appropriate, and the description will focus on the portions that differ from the management system 200. The management system 300 differs from the management system 200 in that one or more operators are assigned to each of one or more parts of one or more vehicles, and is otherwise configured in the same manner as the management system 200.

Specifically, the management system 300 includes a vehicle 201 and a management apparatus 303 that are connected via a network 14, the management apparatus 303 being connected to a remote monitoring apparatus 202.

The management apparatus 303 (information processing apparatus) differs from the management apparatus 203 in Fig. 13 in that the management apparatus 303 includes a determination unit 331 and an assignment unit 332 instead of the determination unit 231 and the assignment unit 232, and is otherwise configured in the same manner as the management apparatus 203.

Similarly to the determination unit 231, the determination unit 331 receives the proficiency level P of each operator and supplies the proficiency level P to the proficiency level management unit 110. Similarly to the determination unit 231, the determination unit 331 receives the part required proficiency level Rpp of each vehicle 201. When assigning an operator 151 to each part of the vehicle 201, the determination unit 331 requests the proficiency level P of each operator from the proficiency level management unit 110. On the basis of the proficiency level P supplied by the proficiency level management unit 110 in response to that request and the part required proficiency level Rpp of the part of the vehicle 201 as an assignment target, the determination unit 331 determines which one or more operators 151 can perform a remote monitoring operation on that part. The determination unit 331 supplies the result of the determination to the proficiency level management unit 110 and the assignment unit 332.

The assignment unit 332 assigns one or more operators to each part of each vehicle 201 to remotely monitor that part, on the basis of the result of the determination supplied by the determination unit 331. The assignment unit 332 supplies the result of the assignment to the monitoring state management unit 233. Similarly to the assignment unit 232, the assignment unit 332 acquires a part assignment table from the monitoring state management unit 233 and transmits the assigned part identification information to each remote monitoring apparatus 202 on the basis of the part assignment table.

<First Example of Assignment>

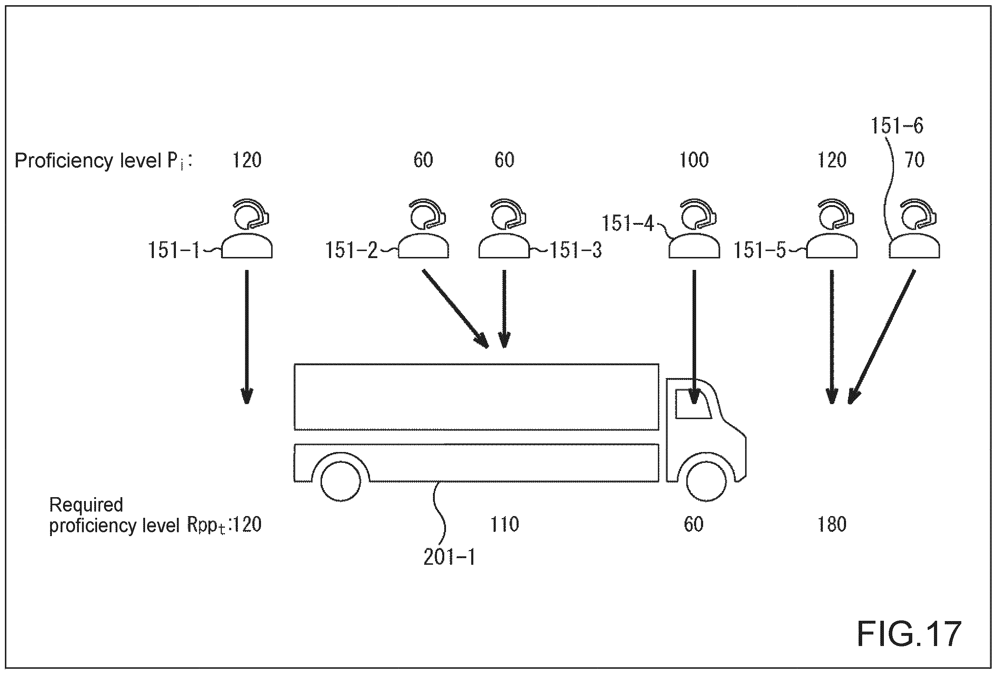

Fig. 17 is a diagram for describing a first example of assignment by the management apparatus 303.

In the example in Fig. 17, the management apparatus 303 assigns one vehicle 201-1 that needs to be remotely monitored to six operators 151-1 to 151-6 who use six remote monitoring apparatuses 202-1 to 202-6, respectively.

In the example in Fig. 17, the proficiency levels $P_1$ to $P_6$ of the operators 151-1 to 151-6 are 120, 60, 60, 100, 120, and 70, respectively. The part required proficiency levels $Rpp_1$ to $Rpp_4$ of the rear, cargo area, driver, and front of the vehicle 201-1 are 120, 110, 60, and 180, respectively.

First, the determination unit 331 of the management apparatus 303 sets, for example, the rear of the vehicle 201-1 as an assignment target, and requests the proficiency level $P_1$ of the operator 151-1, which is held in the proficiency level DB 121, from the proficiency level management unit 110 to acquire the proficiency level $P_1$. Since this proficiency level $P_1$ is not zero, the determination unit 331 determines that the operator 151-1 can perform a remote monitoring operation on the rear of the vehicle 201-1. The determination unit 331 supplies the result of the determination to the proficiency level management unit 110 and the assignment unit 332.

The assignment unit 332 assigns the operator 151-1 to the rear of the vehicle 201-1 on the basis of the result of this determination. On the basis of the result of this determination, the proficiency level management unit 110 updates the proficiency level $P_1$ held in the proficiency level DB 121 to the greater of zero and the value obtained by subtracting the part required proficiency level $Rpp_1$ of the rear of the vehicle as an assignment target from the proficiency level $P_1$. The value obtained by subtracting the part required proficiency level $Rpp_1$ from the proficiency level $P_1$ is zero (= 120 - 120), and thus the updated proficiency level $P_1$ is zero.

The determination unit 331 updates the part required proficiency level $Rpp_1$ of the rear as an assignment target to the value obtained by subtracting the pre-updated proficiency level $P_1$ from the part required proficiency level $Rpp_1$. As a result, the updated part required proficiency level $Rpp_1$ is zero (= 120 - 120). Since the updated part required proficiency level $Rpp_1$ is equal to or less than zero, the determination unit 331 determines that enough operators 151 have been assigned to the rear as the assignment target, and terminates the assignment for the rear.

Next, the determination unit 331 sets, for example, the cargo area of the vehicle 201-1 as an assignment target, and requests the proficiency level $P_1$ of the operator 151-1, which is held in the proficiency level DB 121, from the proficiency level management unit 110 to acquire the proficiency level $P_1$. Since this proficiency level $P_1$ is zero, the determination unit 331 determines that the operator 151-1 cannot perform a remote monitoring operation on the cargo area of the vehicle 201-1. The determination unit 331 supplies the result of the determination to the proficiency level management unit 110 and the assignment unit 332. The assignment unit 332 does not assign the operator 151-1 to the cargo area of the vehicle 201-1, and the proficiency level management unit 110 does not update the proficiency level $P_1$.

Since an operator 151 has not yet been assigned to the cargo area of the vehicle 201-2, the determination unit 331 requests the proficiency level $P_2$ of the operator 151-2, which is held in the proficiency level DB 121, from the proficiency level management unit 110 to acquire the proficiency level $P_2$. Since this proficiency level $P_2$ is not zero, the determination unit 331 determines that the operator 151-2 can perform a remote monitoring operation on the cargo area of the vehicle 201-1. The determination unit 331 supplies the result of the determination to the proficiency level management unit 110 and the assignment unit 332.

The assignment unit 332 assigns the operator 151-2 to the cargo area of the vehicle 201-1 on the basis of the result of this determination. On the basis of the result of the determination, the proficiency level management unit 110 updates the proficiency level $P_2$ held in the proficiency level DB 121 to the greater of zero and the value obtained by subtracting the part required proficiency level $Rpp_2$ of the cargo area from the proficiency level $P_2$. The value obtained by subtracting the part required proficiency level $Rpp_2$ from the proficiency level $P_2$ is -50 (= 60 - 110), and thus the updated proficiency level $P_2$ is zero.

The determination unit 331 updates the part required proficiency level $Rpp_2$ of the cargo area as an assignment target to the value obtained by subtracting the pre-updated proficiency level $P_2$ from the part required proficiency level $Rpp_2$. As a result, the updated part required proficiency level $Rpp_2$ is 50 (= 110 - 60). Since the updated part required proficiency level $Rpp_2$ is greater than zero, the determination unit 331 determines that enough operators 151 have not yet been assigned to the cargo area as an assignment target, and assigns further operators 151 to the cargo area of the vehicle 201-1.

Specifically, the determination unit 331 requests the proficiency level $P_3$ of the operator 151-3 from the proficiency level management unit 110 to acquire the proficiency level $P_3$. Since this proficiency level $P_3$ is not zero, the determination unit 331 determines that the operator 151-3 can perform a remote monitoring operation on the cargo area of the vehicle 201-1. The determination unit 331 supplies the result of the determination to the proficiency level management unit 110 and the assignment unit 332.

The assignment unit 332 assigns the operator 151-3 to the cargo area of the vehicle 201-1 on the basis of the result of this determination. On the basis of the result of this determination, the proficiency level management unit 110 updates the proficiency level $P_3$ held in the proficiency level DB 121 to the greater of zero and the value obtained by subtracting the updated part required proficiency level $Rpp_2$ from the proficiency level $P_3$. The value obtained by subtracting the updated part required proficiency level $Rpp_2$ from the proficiency level $P_2$ is 10 (= 60 - 50), and thus the updated proficiency level $P_2$ is 10.

The determination unit 331 updates the part required proficiency level $Rpp_1$ of the cargo area as an assignment target to the value obtained by subtracting the pre-updated proficiency level $P_3$ from the part required proficiency

Rpp$_2$. As a result, the updated part required proficiency level Rpp$_2$ is -10 (= 50 - 60). Since the part required proficiency level Rpp$_2$ is equal to or less than zero, the determination unit 331 determines that enough operators 151 have been assigned to the cargo area as an assignment target, and terminates the assignment for the cargo area.

As described above, if the sum of the proficiency level P$_2$ of the operator 151-2 and the proficiency level P$_3$ of the operator 151-3 is equal to or greater than the part required proficiency level Rpp$_2$ of the cargo area of the vehicle 201-1, two operators of the operator 151-2 and the operator 151-3 are assigned to that cargo area.

Next, the determination unit 331 sets, for example, the driver of the vehicle 201-1 as an assignment target, and requests the proficiency level P$_4$ of the operator 151-4, which is held in the proficiency level DB 121, from the proficiency level management unit 110 to acquire the proficiency level P$_4$. Since this proficiency level P$_4$ is not zero, the determination unit 331 determines that the operator 151-4 can perform a remote monitoring operation on the driver of the vehicle 201-1. The determination unit 331 supplies the result of the determination to the proficiency level management unit 110 and the assignment unit 332.

The assignment unit 332 assigns the operator 151-4 to the driver of the vehicle 201-1 on the basis of the result of this determination. On the basis of the result of this determination, the proficiency level management unit 110 updates the proficiency level P$_4$ held in the proficiency level DB 121 to the greater of zero and the value obtained by subtracting the part required proficiency level Rpp$_3$ of the driver as an assignment target from the proficiency level P$_4$. The value obtained by subtracting the part required proficiency level Rpp$_3$ from the proficiency level P$_4$ is 40 (= 100 - 60),0 and thus the updated proficiency level P$_4$ is 40.

The determination unit 331 updates the part required proficiency level Rpp$_3$ of the driver as an assignment target to the value obtained by subtracting the pre-updated proficiency level P$_4$ from the part required proficiency level Rpp$_3$. As a result, the updated part required proficiency level Rpp$_3$ is -40 (= 60 - 100). Since the updated part required proficiency level Rpp$_3$ is equal to or less than zero, the determination unit 331 determines that enough operators 151 have been assigned to the driver as an assignment target, and terminates the assignment for the driver.

Next, the determination unit 331 sets, for example, the front of the vehicle 201-1 as an assignment target, and requests the proficiency level P$_5$ of the operator 151-5, which is held in the proficiency level DB 121, from the proficiency level management unit 110 to acquire the proficiency level P$_5$. Since the proficiency level P$_5$ is not zero, the determination unit 331 determines that the operator 151-5 can perform a remote monitoring operation on the front of the vehicle 201-1. The determination unit 331 supplies the result of the determination to the proficiency level management unit 110 and the assignment unit 332.

The assignment unit 332 assigns the operator 151-5 to the front of the vehicle 201-1 on the basis of the result of this determination. On the basis of the result of this determination, the proficiency level management unit 110 updates the proficiency level P$_5$ held in the proficiency level DB 121 to the greater of zero and the value obtained by subtracting the part required proficiency level Rpp$_4$ of the front as an assignment target from the proficiency level P$_5$. The value obtained by subtracting the part required proficiency level Rpp$_4$ from the proficiency level P$_5$ is -60 (= 120 -180), and thus the updated proficiency level P$_5$ is 0.

The determination unit 331 updates the part required proficiency level Rpp$_4$ of the front as an assignment target to the value obtained by subtracting the pre-updated proficiency level P$_5$ from the part required proficiency level Rpp$_4$. As a result, the updated part required proficiency level Rpp$_4$ is 60 (= 180 - 120). Since the updated part required proficiency level Rpp$_4$ is greater than zero, the determination unit 331 determines that enough operators 151 have not yet been assigned to the front as an assignment target, and assigns further operators 151 to the front of the vehicle 201-1.

Specifically, the determination unit 331 requests the proficiency level P$_6$ of the operator 151-6 from the proficiency level management unit 110 to acquire the proficiency level P$_6$. Since the proficiency level P$_6$ is not zero, the determination unit 331 determines that the operator 151-6 can perform a remote monitoring operation on the front of the vehicle 201-1. The determination unit 331 supplies the result of the determination to the proficiency level management unit 110 and the assignment unit 332.

The assignment unit 332 assigns the operator 151-6 to the front of the vehicle 201-1 on the basis of the result of this determination. On the basis of the result of this determination, the proficiency level management unit 110 updates the proficiency level P$_6$ held in the proficiency level DB 121 to the greater of zero and the value obtained by subtracting the updated part required proficiency level Rpp$_4$ from the proficiency level P$_6$. The value obtained by subtracting the updated part required proficiency level Rpp$_4$ from the proficiency level P$_6$ is 10 (= 70 - 60), and thus the updated proficiency level P$_6$ is 10.

The determination unit 331 updates the part required proficiency level Rpp$_4$ of the front as an assignment target to the value obtained by subtracting the pre-updated proficiency level P$_6$ of the operator 151-6 from the part required proficiency level Rpp$_4$. As a result, the updated part required proficiency level Rpp$_4$ is -10 (= 60 - 70). Since the part required proficiency level Rpp$_4$ is equal to or less than zero, the determination unit 331 determines that enough operators 151 have been assigned to the front of the vehicle 201-1 as the assignment target, and terminates the assignment for the front.

As described above, if the sum of the proficiency level P$_5$ of the operator 151-5 and the proficiency level P$_6$ of the operator 151-6 is equal to or greater than the part required proficiency level Rpp$_4$ of the front of the vehicle 201-1, two operators of the operator 151-5 and the operator 151-6 are assigned to that cargo area.

<Second Example of Assignment>

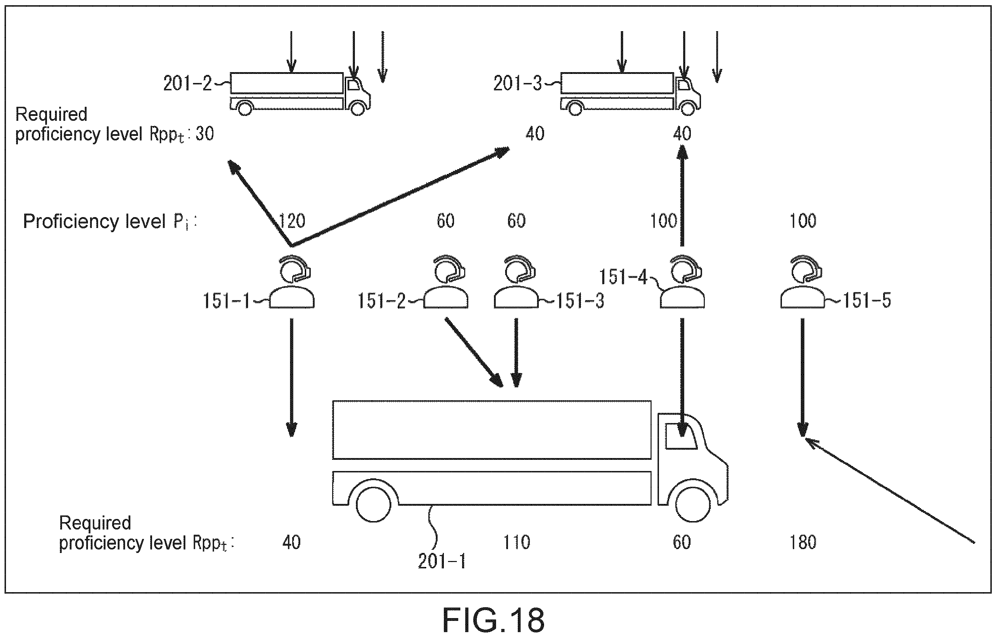

Fig. 18 is a diagram for describing a second example of assignment by the management apparatus 303.
In the example in Fig. 18, the management apparatus 303 assigns three vehicles 201-1 to 201-3 that need to be remotely monitored to five operators 151-1 to 151-5 who use five remote monitoring apparatuses 202-1 to 202-5, respectively.
In the example in Fig. 18, the proficiency levels $P_1$ to $P_5$ of the operators 151-1 to 151-5 are 120, 60, 60, 100, and 100, respectively. The part required proficiency levels $Rpp_1$ to $Rpp_4$ of the rear, cargo area, driver, and front of the vehicle 201-1 are 40, 110, 60, and 180, respectively. The part required proficiency level $Rpp_1$ of the rear of the vehicle 201-2 is 30. The part required proficiency level $Rpp_1$ of the rear of the vehicle 201-3 is 40, and the part required proficiency level $Rpp_3$ of the driver is 40.
Also in Fig. 18, similarly to the case of Fig. 17, the operators 151 including the five operators 151-1 to 151-5 are assigned to each part of the three vehicles 201-1 to 201-3. However, in the example in Fig. 18, the order of assignment of the operators 151 in the assignment processing is set such that a given part is assigned to a given operator 151 with priority. Specifically, the order of assignment of the operators 151 in the assignment processing is set such that the operator 151-1 is assigned to the rear of the vehicle 201, the operators 151-2 and 151-3 to the cargo area, the operator 151-4 to the driver, and the operator 151-5 to the front of the vehicle with priority.
Thus, the operator 151-1 is preferentially assigned to the rear of the vehicles 201-1 to 201-3. Specifically, since the sum of the part required proficiency levels $Rpp_1$ of the rears of the vehicles 201-1 to 201-3 is 110 (= 40 + 30 + 40), the operator 151-1 having the proficiency level $P_1$ of 120 is assigned to the rears of the vehicles 201-1 to 201-3.
The operators 151-2 and 151-3 are preferentially assigned to the cargo areas of the vehicles 201-1 to 201-3. Since the part required proficiency level $Rpp_2$ of the cargo area of the vehicle 201-1 is 110, the operators 151-2 and 151-3 each having the proficiency level $P_2$ of 60 are assigned to the cargo area of the vehicle 201-1.
The operator 151-4 is preferentially assigned to the drivers of the vehicles 201-1 to 201-3. Since the sum of the part required proficiency levels $Rpp_3$ of the drivers of the vehicles 201-1 and 201-3 is 100 (= 60 + 40), the operator 151-4 having the proficiency level $P_4$ of 100 is assigned to the drivers of the vehicles 201-1 and 201-3.
The operator 151-5 is preferentially assigned to the fronts of the vehicles 201-1 to 201-3. Since the part required proficiency level $Rpp_4$ of the front of the vehicle 201-1 is 180, the operator 151-5 having the proficiency level $P_5$ of 100 is assigned to the front of the vehicle 201-1. The value obtained by subtracting the proficiency level $P_5$ of the operator 151-5 from the part required proficiency level $Rpp_4$ of the front of the vehicle 201-1 is greater than zero, and thus the operator 151 to be assigned to the front of that vehicle is not sufficient by only the operator 151-4. Therefore, other operators 151 (not shown) are also assigned.
As described above, when the order of assignment of the operators 151 in the assignment processing is set such that a given part is preferentially assigned to a given operator 151, each operator 151 can perform a specialized operation.

<Description of Assignment Processing>

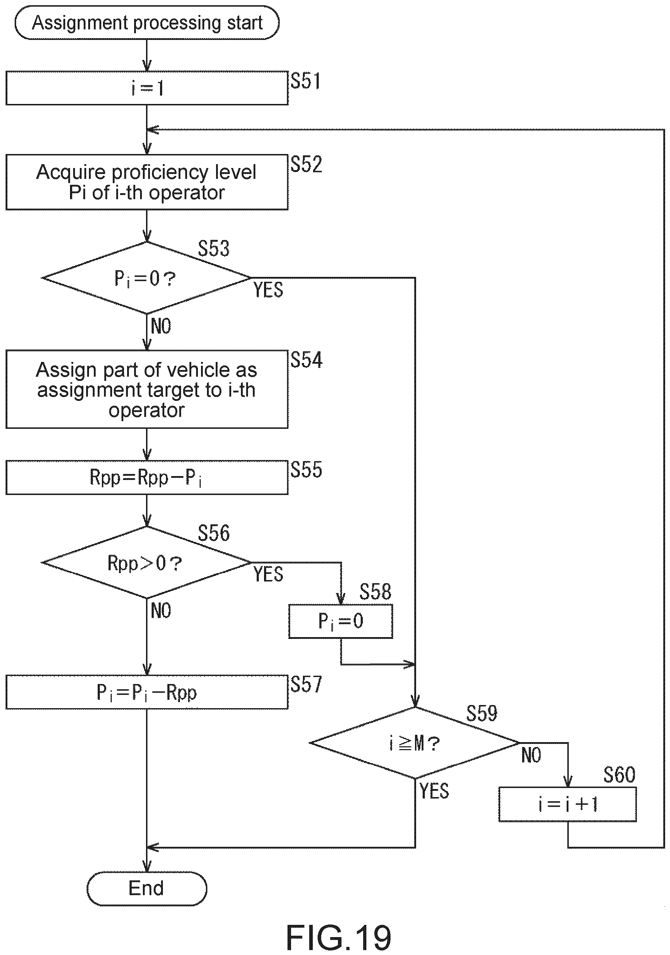

Fig. 19 is a flowchart for describing the assignment processing by the management apparatus 303. This assignment processing is performed, for example, with each part of each vehicle 201 that needs to be remotely monitored being as an assignment target.
The processing in Steps S51 and S52 in Fig. 19 are similar to the processing in Steps S11 and S12 in Fig. 12, and thus description thereof will be omitted.
In Step S53, the determination unit 331 determines whether or not the proficiency level $P_i$ is zero. If it is determined in Step S53 that the proficiency level $P_i$ is not zero, the determination unit 331 determines that the i-th operator 151-i can perform a remote monitoring operation on the part as an assignment target. The determination unit 331 supplies the result of the determination to the proficiency level management unit 110 and the assignment unit 332.
Subsequently, in Step S54, the assignment unit 332 assigns the part of the vehicle 201 as an assignment target to the i-th operator 151-i on the basis of the result of the determination from the determination unit 331. The assignment unit 332 supplies the result of the assignment to the monitoring state management unit 233. Thus, the part assignment table held in the monitoring DB 241 is updated. As a result, the assigned part identification information for identifying the part as an assignment target is transmitted to a remote monitoring apparatus 202-i used by the operator 151-i. Accordingly, the operator 151-i performs a remote monitoring operation on that part.
In Step S55, the determination unit 331 updates the part required proficiency level Rpp of the part as an assignment target to the value obtained by subtracting the proficiency level $P_1$ from the part required proficiency level Rpp. In Step S56, the determination unit 451 determines whether or not the updated part required proficiency level Rpp is greater than zero. If it is determined in Step S56 that the part required proficiency level Rpp is not greater than zero, the determination unit 331 determines that enough operators 151 have been assigned to the assignment target, and the processing proceeds to Step S57.

In Step S57, the proficiency level management unit 110 updates the proficiency level $P_i$ held in the proficiency level DB 121 to the value obtained by subtracting the part required proficiency level Rpp of the part as an assignment target from the proficiency level $P_i$. The processing is then terminated.

On the other hand, if it is determined in Step S56 that the part required proficiency level Rpp is greater than zero, the determination unit 331 determines that enough operators 151 have not yet been assigned to the assignment target, and the processing proceeds to Step S58.

In Step S58, the proficiency level management unit 110 updates the proficiency level $P_i$ to zero. In other words, since the value obtained by subtracting the part required proficiency level Rpp of the part as an assignment target from the proficiency level $P_i$ is less than zero, the proficiency level management unit 110 updates the proficiency level $P_i$ to zero. The processing then proceeds to Step S59.

On the other hand, if it is determined in Step S53 that the proficiency level $P_i$ is zero, the determination unit 331 determines that the operator 151-i cannot perform a remote monitoring operation, and supplies the result of the determination to the proficiency level management unit 110 and the assignment unit 332. The processing then proceeds to Step S59.

In Step S59, the determination unit 331 determines whether i is equal to or greater than the total number M of operators 151. If it is determined in Step S59 that i is not equal to or greater than the total number M of operators 151, in Step S60, the determination unit 331 increments i by 1, returns the processing to Step S52, and repeats the processing thereafter.

On the other hand, if it is determined in Step S59 that i is equal to or greater than the total number M of operators 151, that is, if the processing in Steps S52 and S53 have been performed for the proficiency levels $P_i$ of all the operators 151, the processing is terminated. In this case, enough operators 151 are not assigned to the part as an assignment target.

Note that the assignment processing in Fig. 19 is redone when the vehicle 201 that needs to be remotely monitored or the part required proficiency level Rpp changes. This makes it possible to prevent the assignment situation from deteriorating and interfering with remote monitoring when the vehicle 201 that needs to be remotely monitored or the part required proficiency level Rpp changes.

In the assignment processing in Fig. 19, the order of assignment of the operators 151 may be the same for all assignment targets or may be different for each assignment target. The order of assignment of the operators 151 may be set, for example, in descending or ascending order of the proficiency level P. If the order of assignment is set in ascending order of the proficiency level P, the number of operators 151 who perform remote monitoring operations can be increased. In other words, the base of operators who can perform remote monitoring operations can be broadened. In addition, the proficiency levels P of the operators 151 with low proficiency level P can be improved.

The order of assignment of the operators 151 may also be different for the same assignment target. For example, in the first assignment for an assignment target, the order of assignment of the operators 151 may be set in descending order of the proficiency level P, and in the second assignment, the order of assignment may be set in ascending order of the proficiency level P. In this case, an operator 151 with high proficiency level P and an operator 151 with low proficiency level P are assigned to the same assignment target. As a result, there is a possibility that the proficiency level P of the operator 151 with low proficiency level P is improved.

As described above, the management system 300 determines the states of the plurality of vehicles 201 to be remotely monitored and the static states of the plurality of operators 151 regarding their remote monitoring operations, and on the basis of those states, assigns one or more operators 151 to each part of the plurality of vehicles 201 to remotely monitor that part. Thus, one or more appropriate operators can be assigned to each part of the vehicle 201 on the basis of both the state of the vehicle 201 and the state of the operator 151.

In addition, the vehicle 201 can be assigned to an operator 151 with low proficiency level P to broaden the base of operators 151 who can perform remote monitoring operations. For example, an assignment target is assigned to a plurality of operators 151 with low proficiency level P, instead of one operator 151 with high proficiency level P, so that an assignment target can be easily assigned to operators 151 with low proficiency level P. The above allows for flexible remote monitoring.

Note that, in the management system 200 (300), one operator 151 may be assigned to the remaining part required proficiency levels Rpp after assignment in all parts of the vehicle 201.

<Fourth Embodiment>

<Configuration Example of Management System>

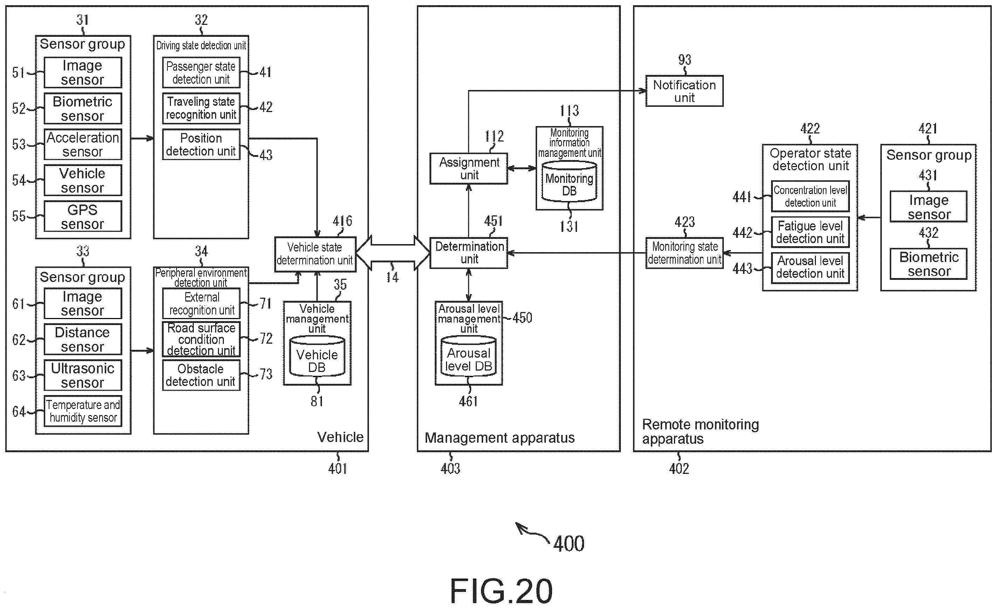

Fig. 20 is a block diagram showing a configuration example of a fourth embodiment of a management system as an information processing system to which the present technology is applied.

In a management system 400 shown in Fig. 20, the portions corresponding to the management system 10 in Fig. 2 are denoted by the same reference symbols. Therefore, the description of those portions will be omitted as appropriate, and the description will focus on the portions that differ from the management system 10. The management system 400 differs from the management system 10 in that assignment is performed on the basis of an arousal level A and a required arousal level Ra, instead of the proficiency level P and the required proficiency level Rp, and in that one or more operators are assigned to one vehicle, and is otherwise configured in the same manner as the management system 10.

Specifically, the management system 400 includes a vehicle 401 and a management apparatus 403 that are connected via a network 14, the management apparatus 403 being connected to a remote monitoring apparatus 402. The vehicle 401 differs from the vehicle 11 in Fig. 2 in that the vehicle 401 includes a vehicle state determination unit 416 instead of the vehicle state determination unit 36, and is otherwise configured in the same manner as the vehicle 11.

Similarly to the vehicle state determination unit 36, the vehicle state determination unit 416 determines a dynamic state of the vehicle 401 on the basis of the driving state information and the peripheral environment information. Similarly to the vehicle state determination unit 36, the vehicle state determination unit 416 also determines a static state of the vehicle 401 on the basis of the vehicle characteristic information. On the basis of at least one of the dynamic state or the static state of the vehicle 401, the vehicle state determination unit 416 calculates a required arousal level Ra, which is the level of arousal state of an operator 151 regarding a remote monitoring operation and is required for a remote monitoring operation for the vehicle 401.

Specifically, the vehicle state determination unit 416 calculates the required arousal level Ra, for example, by multiplying a basic score of the required arousal level Ra corresponding to the static state of the vehicle 401 by a correction factor corresponding to the dynamic state of the vehicle 401. Note that the basic score and the correction factor are set such that, as the difficulty of remote monitoring becomes higher, the required arousal level Ra becomes higher.

The remote monitoring apparatus 402 differs from the remote monitoring apparatus 12 in Fig. 2 in that the remote monitoring apparatus 402 includes a sensor group 421 and an operator state detection unit 422, includes a monitoring state determination unit 423 instead of the monitoring state determination unit 92, and does not include the operator management unit 91, and is otherwise configured in the same manner as the remote monitoring apparatus 12.

The sensor group 421 includes an image sensor 431 and a biometric sensor 432. The image sensor 431 captures an image of an operator 151 who uses the remote monitoring apparatus 402, and acquires the image of the operator 151. The image sensor 431 supplies the image to the operator state detection unit 422. The biometric sensor 432 detects biometric information of the operator 151 who uses the remote monitoring apparatus 402, by contact or in a non-contact manner, and supplies the biometric information to the operator state detection unit 422. If the biometric sensor 432 detects biometric information in a non-contact manner, the burden on the operator 151 to wear the sensor can be reduced. If the biometric sensor 432 detects biometric information by contact, the biometric information with higher accuracy can be detected.

The operator state detection unit 422 includes a concentration level detection unit 441, a fatigue level detection unit 442, and an arousal level detection unit 443.

The concentration level detection unit 441 detects the concentration level, which is the level of concentration state of the operator 151 regarding a remote monitoring operation, on the basis of the image supplied by the image sensor 431 and the biometric information supplied by the biometric sensor 432. For example, the concentration level detection unit 441 detects the concentration level on the basis of the level of eye opening, the number of blinks, and eye movements (saccade) detected on the basis of the image of the operator 151.

The fatigue level detection unit 442 detects the fatigue level, which is the level of fatigue state of the operator 151 regarding the remote monitoring operation, on the basis of the image supplied by the image sensor 431 and the biometric information supplied by the biometric sensor 432. For example, the fatigue level detection unit 442 detects the fatigue level on the basis of the image of the operator 151, the heartbeat, the pulse, fluctuations in the heartbeat and pulse, the respiratory rate, etc. of the operator 151 in the biometric information, and the like.

The arousal level detection unit 443 detects the arousal level A, which is the level of arousal state of the operator 151 regarding the remote monitoring operation, on the basis of the image supplied by the image sensor 431 and the biometric information supplied by the biometric sensor 432.

The detection method by the concentration level detection unit 441, the fatigue level detection unit 442, and the arousal level detection unit 443 may be a method other than the method described above. For example, the concentration level, fatigue level, and arousal level may be detected by postural changes or vibrations of the head, upper body, legs, etc. of the operator 151.

The concentration level detected by the concentration level detection unit 441, the fatigue level detected by the fatigue level detection unit 442, and the arousal level A detected by the arousal level detection unit 443 represent the level of dynamic state of the operator 151 that changes over time. The concentration level, the fatigue level, and the arousal level are supplied to the monitoring state determination unit 423.

The monitoring state determination unit 423 supplies the arousal level A in the concentration level, the fatigue level, and the arousal level A supplied by the operator state detection unit 422 to the management apparatus 403.

The management apparatus 403 (information processing apparatus) differs from the management apparatus 13 in Fig. 2 in that the management apparatus 403 includes an arousal level management unit 450 and a determination unit 451 instead of the proficiency level management unit 110 and the determination unit 111, and is otherwise configured in the same manner as the management apparatus 13.

The arousal level management unit 450 includes an arousal level DB 461. The arousal level management unit 450 causes the arousal level DB 461 to hold the arousal level A of each operator supplied from the determination unit 451. The arousal level management unit 450 updates the arousal level A held in the arousal level DB 461 on the basis of the result of the determination supplied from the determination unit 451. The arousal level management unit 450 reads the arousal level A held in the arousal level DB 461 in response to a request from the determination unit 451, and supplies it to the determination unit 451.

The determination unit 451 receives the arousal level A of the operator 151 from the monitoring state determination unit 423 of each remote monitoring apparatus 402 and supplies the arousal level A to the arousal level management unit 450. The determination unit 451 receives the required arousal level Ra of the vehicle 401 from the vehicle state determination unit 416 of each vehicle 401. When assigning an operator 151 to the vehicle 401, the determination unit 451 requests the arousal level A of each operator 151 from the arousal level management unit 450. On the basis of the arousal level A supplied by the arousal level management unit 450 in response to that request and the required arousal level Ra of the vehicle 401 as an assignment target, the determination unit 451 determines whether or not any one or more operators 151 can perform a remote monitoring operation on that vehicle 401. The determination unit 451 supplies the result of the determination to the arousal level management unit 450 and the assignment unit 112.

<Example of Assignment>

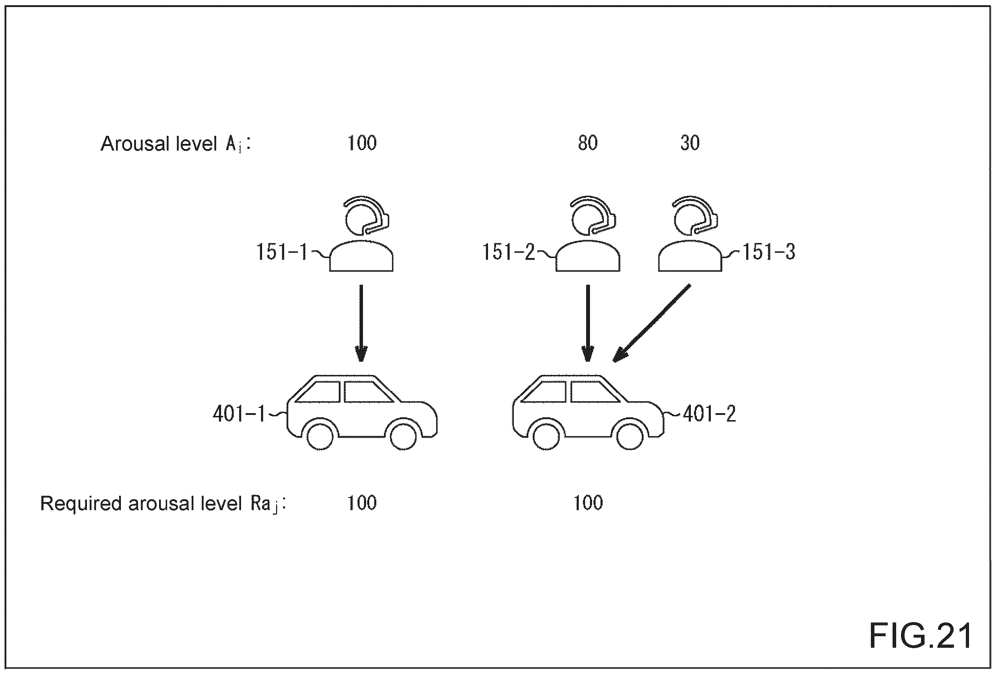

Fig. 21 is a diagram for describing an example of assignment by the management apparatus 403.

In the example in Fig. 21, the management apparatus 403 assigns two vehicles 401-1 and 401-2 that need to be remotely monitored to three operators 151-1 to 151-3 who use three remote monitoring apparatuses 402-1 to 402-3, respectively. Note that hereinafter the arousal level A of the i-th operator 151-i will be referred to as $A_i$, and the required arousal level Ra of the j-th vehicle 401-j will be referred to as $Ra_j$.

In the example in Fig. 21, the arousal level $A_1$ of the operator 151-1 is 100, the arousal level $A_2$ of the operator 151-2 is 80, and the arousal level $A_3$ of the operator 151-3 is 30. The required arousal level $Ra_1$ of the vehicle 401-1 and the required arousal level $Ra_2$ of the vehicle 401-2 are both 100.

First, the determination unit 451 of the management apparatus 403 sets, for example, the vehicle 401-1 as an assignment target, and requests the arousal level $A_1$, which is held in the arousal level DB 461, from the arousal level management unit 450 to acquire the arousal level $A_1$. Since the arousal level $A_1$ is not zero, the determination unit 451 determines that the operator 151-1 can perform a remote monitoring operation on the vehicle 401-1. The determination unit 451 supplies the result of the determination to the arousal level management unit 450 and the assignment unit 112.

The assignment unit 112 assigns the operator 151-1 to the vehicle 401-1 on the basis of the result of the determination. On the basis of the result of this determination, the arousal level management unit 450 updates the arousal level $A_1$ held in the arousal level DB 461 to the smaller of zero and the value obtained by subtracting the required arousal level $Ra_1$ of the vehicle 401-1 as an assignment target from the arousal level $A_1$. The value obtained by subtracting the required arousal level $Ra_1$ from the arousal level $A_1$ is zero (= 100 - 100), and thus the updated arousal level $A_1$ is zero.

The determination unit 451 updates the required arousal level $Ra_1$ of the vehicle 401-1 as an assignment target to the value obtained by subtracting the pre-updated arousal level $A_1$ from the required arousal level $Ra_1$. As a result, the updated required arousal level $Ra_1$ is zero (= 100 - 100). Since the updated required arousal level $Ra_1$ is equal to or less than zero, the determination unit 451 determines that enough operators 151 have been assigned to the vehicle 401-1 and terminates the assignment for the vehicle 401-1.

Next, the determination unit 451 sets, for example, the vehicle 401-2 as the assignment target, and requests the updated arousal level $A_1$, which is held in the arousal level DB 461, from the arousal level management unit 450 to acquire the updated arousal level $A_1$. Since this arousal level $A_1$ is zero, the determination unit 331 determines that the operator 151-1 cannot perform a remote monitoring operation on the vehicle 401-2. The determination unit 451 supplies the result of the determination to the arousal level management unit 450 and the assignment unit 112. The assignment unit 112 does not assign the operator 151-1 to the vehicle 401-2, and the arousal level management unit 450 does not update the arousal level $A_1$.

Since an operator 151 has not yet been assigned to the vehicle 401-2, the determination unit 451 requests the arousal level $A_2$, which is held in the arousal level DB 461, from the arousal level management unit 450 to acquire the arousal level $A_2$. Since this arousal level $A_2$ is not zero, the determination unit 451 determines that the operator 151-2 can perform a remote monitoring operation on the vehicle 401-2. The result of the determination is supplied to the arousal level management unit 450 and the assignment unit 112.

The assignment unit 112 assigns the operator 151-2 to the vehicle 401-2 on the basis of the result of this determination. On the basis of the result of this determination, the arousal level management unit 450 updates the arousal level $A_2$ held in the arousal level DB 461 to the smaller of zero and the value obtained by subtracting the required arousal level $Ra_2$ of the vehicle 401-2 from the arousal level $A_2$. The value obtained by subtracting the required arousal level $Ra_j$ from the arousal level $A_2$ is -20 (= 80 - 100), and thus the updated arousal level $A_2$ is zero. The determination unit 451 updates the required arousal level $Ra_2$ to the value obtained by subtracting the pre-updated arousal level $A_2$ from the required arousal level $Ra_2$. As a result, the updated required arousal level $Ra_2$ is 20 (= 100 - 80). Since the updated required arousal level $Ra_2$ is greater than zero, the determination unit 451 determines that enough operators 151 have not yet been assigned to the vehicle 401-2, and assigns other operators 151 thereto.

Specifically, the determination unit 451 requests the arousal level $A_3$ of the operator 151-3 from the arousal level management unit 450. In response to this request, the arousal level management unit 450 reads the arousal level $A_3$ held in the arousal level DB 461 and supplies it to the determination unit 451. Since this arousal level $A_3$ is not zero, the determination unit 451 determines that the operator 151-3 can perform a remote monitoring operation on the vehicle 401-2. The determination unit 451 supplies the result of the determination to the arousal level management unit 450 and the assignment unit 112.

The assignment unit 112 assigns the operator 151-3 to the vehicle 401-2 on the basis of the result of this determination. On the basis of the result of this determination, the arousal level management unit 450 updates the arousal level $A_3$ held in the arousal level DB 461 to the smaller of zero and the value obtained by subtracting the updated requested arousal level $Ra_3$ from the arousal level $A_3$. The value obtained by subtracting the updated required arousal level $Ra_2$ from the arousal level $A_3$ is 10 (= 30 - 20), and thus the updated arousal level $A_3$ is 10. The determination unit 451 updates the requested arousal level $Ra_2$ to the value obtained by subtracting the pre-updated arousal level $A_3$ from the requested arousal level $Ra_2$. As a result, the updated required arousal level $Ra_2$ is -10 (= 20 - 30). Since the updated required arousal level $Ra_2$ is equal to or less than zero, the determination unit 451 determines that enough operators 151 have been assigned to the vehicle 401-2, and terminates the assignment for the vehicle 401-2.

As described above, if the sum of the arousal level $A_2$ of the operator 151-2 and the arousal level $A_3$ of the operator 151-3 is equal to or greater than the required arousal level $Ra_2$ of the vehicle 401-2, the two operators 151-2 and 151-3 are assigned to that vehicle 401-2.

<Description of Assignment Processing>

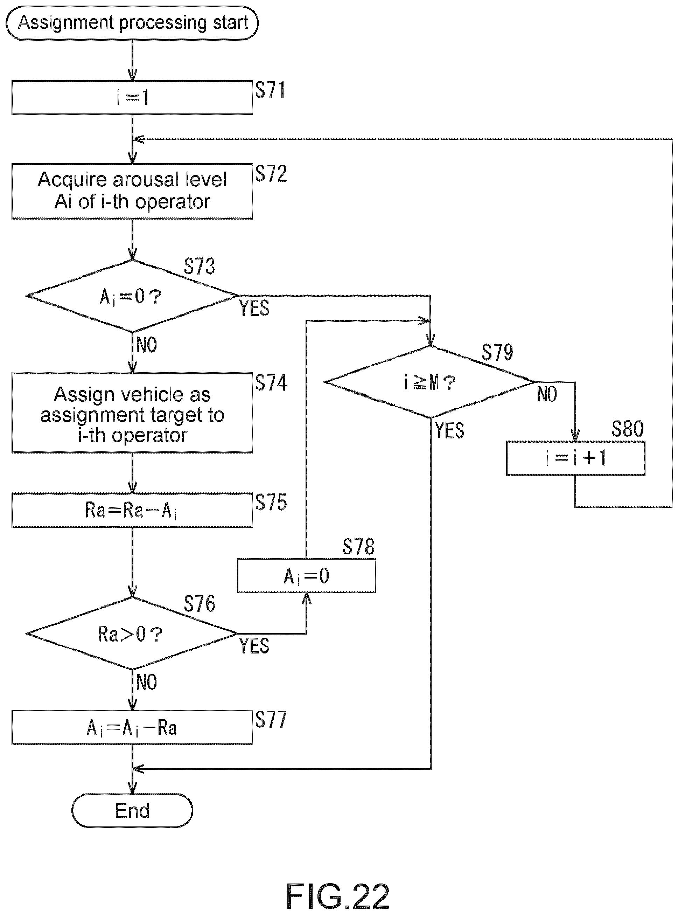

Fig. 22 is a flowchart for describing the assignment processing by the management apparatus 403. This assignment processing is performed, for example, with each vehicle 401 that needs to be remotely monitored being as an assignment target.

In Step S71 of Fig. 22, the determination unit 451 sets i to 1. In Step S72, the determination unit 451 requests the arousal level $A_i$ of the i-th operator 151-i from the arousal level management unit 450 to acquire the arousal level $A_i$.

In Step S73, the determination unit 451 determines whether or not the arousal level $A_i$ is zero. If it is determined in Step S73 that the arousal level $A_i$ is not zero, the determination unit 451 determines that the operator 151-i can perform a remote monitoring operation on the vehicle 401 as an assignment target. The determination unit 451 supplies the result of the determination to the arousal level management unit 450 and the assignment unit 112.

Subsequently, in Step S74, the assignment unit 112 assigns the vehicle 401 as an assignment target to the i-th operator 151-i on the basis of the result of the determination from the determination unit 451. The assignment unit 112 supplies the result of the assignment to the monitoring state management unit 233. Thus, an assignment table held in the monitoring DB 241 is updated. As a result, assigned vehicle identification information for identifying the vehicle 401 as an assignment target is transmitted to a remote monitoring apparatus 402-i used by the operator 151-i. Accordingly, the operator 151-i performs a remote monitoring operation on this vehicle 401.

In Step S75, the determination unit 451 updates the required arousal level Ra of the vehicle 401 as an assignment target to the value obtained by subtracting the arousal level $A_i$ from the required arousal level Ra. In Step S76, the determination unit 451 determines whether or not the updated required arousal level Ra is greater than zero. If it is determined in Step S76 that the required arousal level Ra is not greater than zero, the determination unit 451 determines that enough operators 151 have been assigned to the assignment target, and the processing proceeds to Step S77.

In Step S77, the arousal level management unit 450 updates the arousal level $A_i$ held in the arousal level DB 461 to the value obtained by subtracting the required arousal level Ra of the vehicle 401 as an assignment target from the arousal level $A_i$. The processing is then terminated.

On the other hand, if it is determined in Step S76 that the required arousal level Ra is greater than zero, the determination unit 451 determines that enough operators 151 have not yet been assigned to the assignment target, and the processing proceeds to Step S78.

In Step S78, the arousal level management unit 450 further updates the arousal level $A_i$ to zero. In other words, since the value obtained by subtracting the required arousal level Ra of the vehicle 401 as an assignment target from the arousal level $A_i$ is less than zero, the arousal level management unit 450 updates the arousal level $A_i$ to zero. The

processing then proceeds to Step S79.

On the other hand, if it is determined in Step S73 that the arousal level $A_i$ is zero, the determination unit 451 determines that the operator 151-i cannot perform a remote monitoring operation, and supplies the result of the determination to the arousal level management unit 450 and the assignment unit 112. The processing then proceeds to Step S79.

In Step S79, the determination unit 451 determines whether i is equal to or greater than the total number M of operators 151. If it is determined in Step S79 that i is not greater than the total number M of operators 151, in Step S80, the determination unit 451 increments i by 1. The processing then returns to Step S72, and the processing thereafter is repeated.

On the other hand, if it is determined in Step S79 that i is equal to or greater than the total number M of operators 151, that is, if the processing in Steps S72 and S73 have been performed for the arousal levels $A_i$ of all the operators 151, the processing is terminated. In this case, enough operators 151 are not assigned to the vehicle 401 as an assignment target.

Note that the assignment processing in Fig. 22 is redone when the vehicle 401 that needs to be remotely monitored, the arousal level A, or the arousal level Ra changes. This makes it possible to prevent the assignment situation from deteriorating and interfering with remote monitoring when the vehicle 401, the arousal level A, or the arousal level Ra changes.

In the assignment processing of Fig. 22, the order of assignment of the operators 151 may be the same for all assignment targets or may be different for each assignment target. The order of assignment of the operators 151 can be set, for example, in descending or ascending order of the proficiency level P.

As described above, the management system 400 determines the states of the plurality of vehicles 401 to be remotely monitored and the arousal states as the dynamic states of the plurality of operators 151 regarding their remote monitoring operations, and on the basis of those states, assigns one or more operators 151 to each of the plurality of vehicles 401 to remotely monitor that vehicle 401. Thus, one or more appropriate operators 151 can be assigned to the vehicle 401 on the basis of both the state of the vehicle 401 and the state of the operator 151.

In addition, the remote monitoring operation for one vehicle 401 can be shared by the plurality of operators 151. Therefore, even if the required arousal level Ra of the vehicle 401 to be remotely monitored is large and there is no operator 151 corresponding to an arousal level A equal to or larger than the required arousal level Ra, operators 151 can be assigned to that vehicle 401. It is also possible to assign the vehicle 201 to an operator 151 with low arousal level A. The above allows for flexible remote monitoring.

The management system 400 may perform assignment on the basis of the concentration level or the fatigue level of the operator 151, instead of the arousal level A of the operator 151, or perform assignment on the basis of a combination of at least two of the arousal level A, the concentration level, and the fatigue level. The level of stress state may be employed as the level of dynamic state of the operator 151.

<Fifth Embodiment>

<Configuration Example of Management System>

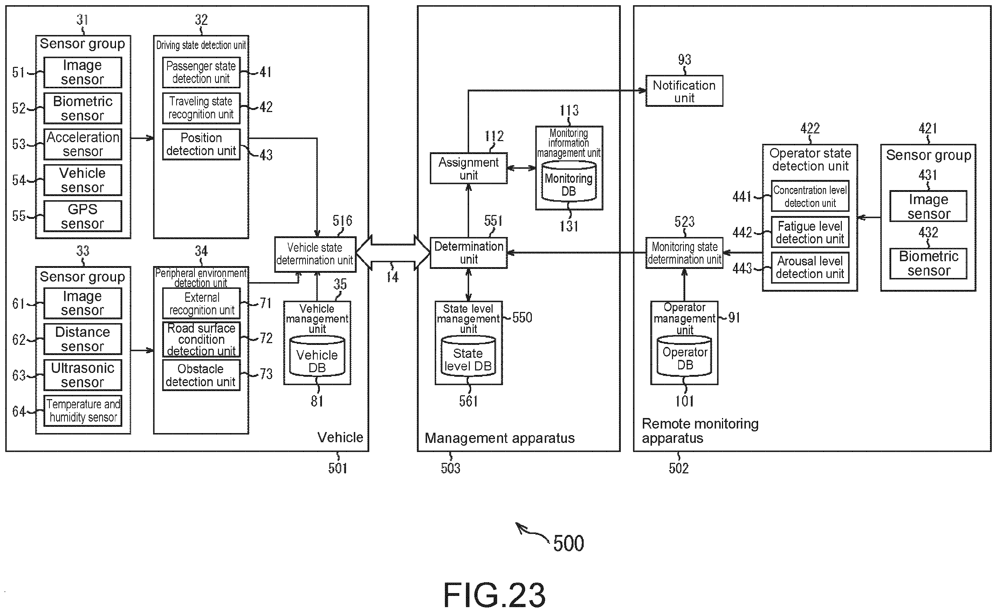

Fig. 23 is a block diagram showing a configuration example of a fifth embodiment of a management system as an information processing system to which the present technology is applied.

In a management system 500 shown in Fig. 23, the portions corresponding to the management system 10 in Fig. 2 and the management system 400 shown in in Fig. 20 are denoted by the same reference symbols. Therefore, the description of those portions will be omitted as appropriate, and the description will focus on the portions that differ from the management systems 10 and 400. The management system 500 differs from the management system 400 in that assignment is performed on the basis of a state level S and a requested state level Sa instead of the arousal level A and the requested arousal level Ra, and is otherwise configured in the same manner as the management system 400. The fifth embodiment is a combination of the first and fourth embodiments.

Specifically, the management system 500 includes a vehicle 501 and a management apparatus 503 that are connected via a network 14, the management apparatus 503 being connected to a remote monitoring apparatus 502. The vehicle 501 differs from the vehicle 401 in Fig. 20 in that the vehicle 501 includes a vehicle state determination unit 516 instead of the vehicle state determination unit 416, and is otherwise configured in the same manner as the vehicle 401.

Similarly to the vehicle state determination unit 416, the vehicle state determination unit 516 determines dynamic and static states of the vehicle 501. On the basis of at least one of the dynamic state or the static state of the vehicle 501, the vehicle state determination unit 516 calculates a required state level Rs, which is the level integrating the level of proficiency state and the level of arousal state of an operator 151 and is required for a remote monitoring operation for the vehicle 501.

Specifically, the vehicle state determination unit 516 calculates a required proficiency level Rp in the same manner as the vehicle state determination unit 36 in Fig. 2. The vehicle state determination unit 516 calculates the required arousal level Ra in the same manner as the vehicle state determination unit 416 in Fig. 20. The vehicle state determination unit 516 calculates the required state level Rs by, for example, multiplying the basic score of the required state level Rs corresponding to the required proficiency level Rp by a correction factor corresponding to the required arousal level Ra.

The remote monitoring apparatus 502 differs from the remote monitoring apparatus 402 in Fig. 20 in that the remote monitoring apparatus 502 includes a monitoring state determination unit 523 instead of the monitoring state determination unit 423 and includes an operator management unit 91, and is otherwise configured in the same manner as the remote monitoring apparatus 402.

The monitoring state determination unit 523 calculates the proficiency level P in the same manner as the monitoring state determination unit 92. The monitoring state determination unit 523 calculates the state level S on the basis of the arousal level A and the proficiency level P in the concentration level, the fatigue level, and the arousal level A provided by the operator state detection unit 422. For example, the monitoring state determination unit 523 calculates the state level S by multiplying the basic score of the state level S corresponding to the proficiency level P by a correction factor corresponding to the arousal level A. The monitoring state determination unit 523 supplies the state level S to the management apparatus 503.

The management apparatus 503 (information processing apparatus) differs from the management apparatus 403 in Fig. 20 in that the management apparatus 503 includes a state level management unit 550 and a determination unit 551 instead of the arousal level management unit 450 and the determination unit 451, and is otherwise configured in the same manner as the management apparatus 403.

The state level management unit 550 includes a state level DB 561. The state level management unit 550 causes the state level DB 561 to hold the state level S of each operator supplied from the determination unit 551. The state level management unit 550 updates the state level S held in the state level DB 561 on the basis of the result of the determination supplied from the determination unit 551. The state level management unit 550 reads the state level S held in the state level DB 561 in response to a request from the determination unit 551 and supplies it to the determination unit 551.

The determination unit 551 receives the state level S of the operator 151 from the monitoring state determination unit 523 of each remote monitoring apparatus 502 and supplies the state level S to the state level management unit 550. The determination unit 551 receives the required state level Rs from the vehicle state determination unit 516 of each vehicle 501. When assigning an operator 151 to the vehicle 501, the determination unit 551 requests the state level S of each operator 151 from the state level management unit 550. On the basis of the state level S supplied by the state level management unit 550 in response to that request and the required state level Rs of the vehicle 501 as an assignment target, the determination unit 551 determines whether or not any one or more operators 151 can perform a remote monitoring operation on that vehicle 501. The determination unit 551 supplies the result of the determination to the state level management unit 550 and the assignment unit 112.

As described above, the management system 500 determines the states of the plurality of vehicles 501 to be remotely monitored and the static and dynamic states of the plurality of operators 151 regarding monitoring, and on the basis of those states, assigns one or more operators 151 to each of the plurality of vehicles 501 to remotely monitor that vehicle 501. Therefore, one or more appropriate operators 151 can be assigned to the vehicle 501 on the basis of both the state of the vehicle 401 and the state of the operator 151.

In the fifth embodiment, the first and fourth embodiments are combined, but the second or third embodiment and the fourth embodiment may also be combined. Specifically, in the management system 200 (300), assignment may be performed on the basis of a part required state level Rsp obtained by dividing the required state level Rs for each of the parts, and the state level S.

<Configuration Example of Computer>

The series of processing described above can be executed by hardware or software. When the series of processing is executed by software, a program constituting the software is installed on a computer. Here, the computer includes a computer built into dedicated hardware and, for example, a general-purpose personal computer that can execute various functions by installing various programs thereon.

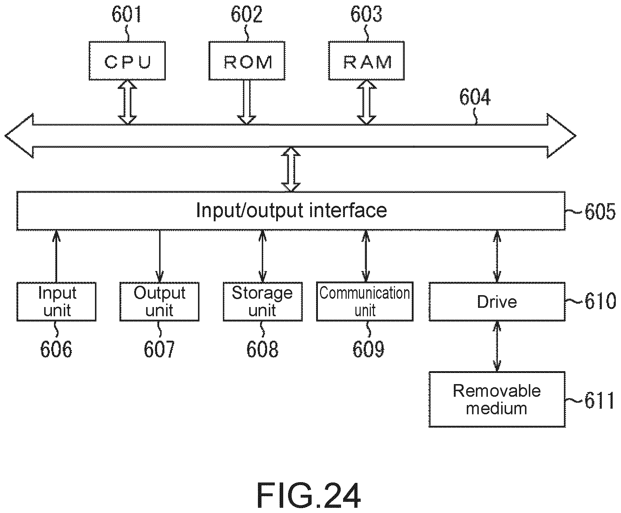

Fig. 24 is a block diagram showing a hardware configuration example of the computer that executes the series of processing described above with a program.

In the computer, a central processing unit (CPU) 601, a read only memory (ROM) 602, and a random access memory (RAM) 603 are mutually connected by a bus 604.

In addition, an input/output interface 605 is connected to the bus 604. Connected to the input/output interface 605 are an input unit 606, an output unit 607, a storage unit 608, a communication unit 609, and a drive 610.

The input unit 606 includes a keyboard, a mouse, a microphone, and the like. The output unit 607 includes a display, a speaker, and the like. The storage unit 608 includes a hard disk, a non-volatile memory, and the like. The communication unit 609 includes a network interface and the like. The drive 610 drives a removable medium 611 such as a magnetic disk, an optical disc, a magneto-optical disk, or a semiconductor memory.

In the computer configured as described above, the series of processing described above is performed by the CPU 601, for example, loading a program stored in the storage unit 608 to the RAM 603 via the input/output interface 605 and the bus 604 and executing the program.

Programs to be executed by the computer (CPU 601) can be provided, for example, by being recorded on the removable medium 611 as packaged media. Programs can also be provided via a wired or wireless transmission medium such as a local area network, the Internet, or digital satellite broadcasting.

In the computer, a program can be installed on the storage unit 608 via the input/output interface 605 by mounting the removable medium 611 to the drive 610. Programs can also be received by the communication unit 609 via a wired or wireless transmission medium and installed on the storage unit 608. Other programs can be installed in advance on the ROM 602 or the storage unit 608.

Note that the programs to be executed by the computer may be programs that are processed chronologically according to the order described herein, or may be programs that are processed in parallel or at the necessary timing, such as when a call is made.

In the first to fifth embodiments, if one operator 151 is assigned to a plurality of vehicles 11 (201, 401, 501), it is considered that the remote monitoring of the plurality of vehicles 11 (201, 401, 501) increases the burden of remote monitoring on the operator 151. Therefore, if the $n_j$-th ($n_j$ is an integer equal to or greater than 1) vehicle 11 (201, 401, 501) is assigned to the operator 151, the required proficiency level Rp (required arousal level Ra, required state level Rs) of the $n_j$-th vehicle 11 (201, 401, 501) is increased by the value $a(n_j-1)$ times, the value $a(n_j-1)$ being obtained by multiplying a predetermined value a, which is less than 1, by $n_j-1$.

Accordingly, for example, if the following equation (1) is established, N (N is an integer equal to or greater than 1) vehicles 11 (201) are assigned to one operator 151. Note that, in the equation (1), $Rpn_j$ represents the required proficiency level Rp of the $n_j$-th vehicle 11 (201) to be assigned.

[Math. 1]

$$P \geqq \sum_{n_j=1}^{N} ((1 + (n_j - 1) \times a) \times Rpn_j) \qquad \cdot \cdot \cdot (1)$$

In other words, if the proficiency level P of one operator 151 is equal to or greater than the sum obtained by increasing the required proficiency level $Rpn_i$ of the $n_i$-th vehicle 11 (201) by the value $a(n_i-1)$ times the required proficiency level $Rpn_i$ and adding the required proficiency levels Rp of the N vehicles 11 (201), one operator 151 is assigned to the N vehicles 11 (201).

For example, if the predetermined value a is 0.2, that is, if the required proficiency level Rp is increased by 20% for each additional vehicle 11 (201) to be assigned, in Fig. 11 described above, the sum of the required proficiency levels Rp of the vehicles 11-1 to 11-3 is 228 ( = 40 + 40 x 1.2 + 100 x 1.4). Thus, since the proficiency level P of the operator 151-1, which is 200, is not greater than the sum, the three vehicles 11-1 to 11-3 cannot be assigned to the operator 151-1. Therefore, in this case, two vehicles 11-1 and 11-3 are assigned to the operator 151-1, for example. Since the sum of the proficiency levels P of the two vehicles 11-1 and 11-3 is 160 (= 40 + 100 x 1.2), the proficiency level P of the operator 151-1, which is 200, is equal to or greater than the sum. Note that, in the equation (1), $(1 + (n_j-1) \times a)$ is not limited thereto as long as it is a correction factor $f(n_j)$ when a remote monitoring operation is performed on the $n_j$-th vehicle 11 (201). The same holds true for the case where assignment is performed on the basis of the required arousal level Ra (required state level Rs) and the arousal level A (state level S).

Note that, instead of increasing the required proficiency level Rp (required arousal level Ra, required state level Rs) by the value $a(n_j-1)$ times, the proficiency level P (arousal level A, state level S) may be reduced by the value a' $(n_j-1)$ times, the value a' $(n_j-1)$ being obtained by multiplying a predetermined value a', which is less than 1, of the proficiency level P (arousal level A, state level S), by $n_j-1$. In this case, if the $n_j$-th vehicle 11 (201, 401, 501) is assigned to one operator 151, the proficiency level P (arousal level A) of that operator 151 is reduced by the value a' $(n_j-1)$ times.

If a plurality of operators 151 is assigned to one vehicle 201 (401, 501), it is considered that the concentration levels of the operators 151 for remote monitoring are reduced due to the remote monitoring by the plurality of operators 151. Therefore, if the $n_i$-th operator ($n_i$ is an integer equal to or greater than 1) is assigned to one vehicle 201 (401), the proficiency level P (arousal level A, state level S) of the $n_i$-th operator 151 is reduced by the value $b(n_i-1)$ times, the value $b(n_i-1)$ being obtained by multiplying a predetermined value b, which is less than 1, by $n_i-1$.

Accordingly, for example, if the following equation (2) is established, one vehicle 201 is assigned to the N operators 151. Note that, in the equation (2), $An_i$ represents the arousal level A of the $n_i$-th operator 151 to be assigned.

[Math. 2]

$$Ra \leqq \sum_{n_i=1}^{N} ((1 - (n_i - 1) \times b) \times An_i) \qquad \cdots (2)$$

In other words, if the sum obtained by reducing the arousal level $An_i$ of the $n_i$-th operator 151 by the value $b(n_i-1)$ times the arousal level $An_i$ and adding the arousal levels A of the N operators 151 is equal to or greater than the required arousal level Ra of the vehicle 201, those N operators 15 are assigned to that vehicle 201. The same holds true for the case where assignment is performed on the basis of the part required proficiency level Rpp (required state level Rs) and proficiency level P (state level S).

For example, if the predetermined value b is 0.2, that is, if the proficiency level P is reduced by 20% for each additional operator 151 to be assigned, in Fig. 17 described above, the sum of the proficiency levels P of the operators 151-2 and 151-3 is 108 (= 60 + 60 x 0.8). Thus, since the sum is not equal to or greater than 110, which is the part required proficiency level $Rpp_2$ of the cargo area of the vehicle 201-1, the two operators 151-2 and 151-3 cannot be assigned to the cargo area of the vehicle 201-1.

Note that, instead of reducing the proficiency level P (arousal level A, state level S) by the value $b(n_i-1)$ times, the required proficiency level Rp (required arousal level Ra, required state level Rs) may be increased by the value $b'(n_i-1)$ times, the value $b'(n_i-1)$ being obtained by multiplying a predetermined value b', which is less than 1, of the required proficiency level Rp (required arousal level Ra, required state level Rs), by $n_i-1$. In this case, if the $n_i$-th operator 151 is assigned to one vehicle 201 (401), the required proficiency level Rp (required arousal level Ra, required state level Rs) of that vehicle 201 (401) is increased by the value $b'(n_i-1)$ times. In the equation (2), $(1 - (n_i-1) \times b)$ is not limited thereto as long as it is a correction factor $g(n_i)$ when the $n_i$-th operator 151 performs a remote monitoring operation.

The vehicle management unit 35 (215) and the vehicle state determination unit 36 (216, 416, 516) as well as the operator management unit 91 and the monitoring state determination unit 92 (423, 523) may be provided in the management apparatus 13 (203, 303, 403, 503). In this case, the vehicle management unit 35 (215) and the vehicle state determination unit 36 (216, 416, 516) perform processing for all vehicles 11, and the operator management unit 91 and the monitoring state determination unit 92 (423, 523) perform processing for all operators 151.

In the first and fifth embodiments, the operator 151 performs a remote monitoring operation, but may also perform other remote assistance operations and remote piloting operations that are included in remote driving. In the present technology, the target of the remote monitoring operation is not limited to vehicles.

The remote monitoring operation for the vehicle 11 (201, 401, 501) can include remote monitoring of not only the driver of the vehicle 11 (201, 401, 501), but also passengers other than the driver, pets, objects on the vehicle 201, such as the luggage on seats and mounts. In this case, the management system 200 (300) divides the required proficiency level Rp of the vehicle 201, with such objects on the vehicle 201 being also regarded as parts. The remote monitoring operations for passengers and pets include monitoring of movements using camera images, etc.; monitoring of sensing data by cameras, thermo-sensors, millimeter wave radar sensors, heart rate sensors, pulse wave sensors, and other biometric sensors, etc.; and monitoring of states of fatigue, intoxication, drowsiness, etc., inferred from such sensing data.

In the assignment processing of the first to fifth embodiments, the assignment of the operator 151 may be performed such that the remaining required proficiency level Rp (part required proficiency level Rpp, required arousal level Ra, required state level Rs) of the assignment targets for which the assignment has not been fully performed is the smallest.

Note that in this specification a system means a set of a plurality of constituent elements (apparatuses, modules (components), etc.), regardless of whether all constituent elements are in the same enclosure or not. Thus, a plurality of apparatuses housed in separate enclosures and connected via a network, and a single apparatus containing a plurality of modules in a single enclosure are both systems.

The embodiments of the present technology are not limited to the embodiments described above and can be variously modified without departing from the gist of the present technology.

For example, a combination form of all or some of the plurality of embodiments described above can be adopted.

For example, the present technology can be configured as cloud computing, in which a single function is shared and processed cooperatively by a plurality of apparatuses via a network.

Further, each of the steps in the flowchart described above can be executed by a single apparatus or shared by a plurality of apparatuses to be executed.

Furthermore, if a single step includes a plurality of processes, the plurality of processes included in that single step can be executed by a single apparatus or shared by a plurality of apparatuses to be executed.

Note that the effects described herein are mere examples and are not limited, and there may be effects other than those described herein.

The present technology may have the following configurations.

(1) An information processing system, including:

a vehicle state determination unit that determines states of a plurality of vehicles to be remotely monitored;

a monitoring state determination unit that determines states of a plurality of operators regarding remote monitoring; and

an assignment unit that assigns, on the basis of the states of the plurality of vehicles that are determined by the vehicle state determination unit and the states of the plurality of operators regarding remote monitoring that are determined by the monitoring state determination unit, one or more of the plurality of operators to each of the plurality of vehicles to remotely monitor the vehicle.

(2) The information processing system according to (1), in which

the assignment unit is configured to assign several operators of the plurality of operators to one vehicle of the plurality of vehicles.

(3) The information processing system according to (2), in which

the assignment unit is configured to assign one or more of the plurality of operators to each part of the one vehicle to remotely monitor the part.

(4) The information processing system according to any one of (1) to (3), in which

the assignment unit is configured to assign one of the plurality of operators to the plurality of vehicles.

(5) The information processing system according to any one of (1) to (4), in which

the vehicle state determination unit is configured to calculate a required state level for each of the vehicles, the required state level being a level of the state of the operator regarding remote monitoring and being required to monitor the vehicle, on the basis of the state of the vehicle,

the monitoring state determination unit is configured to calculate a state level for each of the operators, the state level being a level of the state of the operator regarding remote monitoring, on the basis of the state of the operator regarding remote monitoring, and

the assignment unit is configured to assign, on the basis of the required state levels of the plurality of vehicles and the state levels of the plurality of operators, one or more of the plurality of operators to each of the plurality of vehicles to remotely monitor the vehicle.

(6) The information processing system according to (5), in which

the assignment unit is configured to assign, if the state level of one of the plurality of operators is equal to or greater than the required state level of one of the plurality of vehicles, the one operator to the one vehicle.

(7) The information processing system according to (5) or (6), in which

the assignment unit is configured to assign, if the state level of one of the plurality of operators is equal to or greater than a sum of the required state levels of several vehicles of the plurality of vehicles, the one operator to the several vehicles.

(8) The information processing system according to (7), in which

the assignment unit is configured to increase, when the sum of the required state levels is calculated, the required state level of an n-th vehicle of the vehicles by a value a(n-1) times the required state level, the value a(n-1) being obtained by multiplying a predetermined value a, which is less than 1, by n-1.

(9) The information processing system according to any one of (5) to (8), in which

the assignment unit is configured to assign, if a sum of the state levels of several operators of the plurality of operators is equal to or greater than the required state level of one of the plurality of vehicles, the several operators to the one vehicle.

(10) The information processing system according to (9), in which

the assignment unit is configured to decrease, when the sum of the state levels is calculated, the state level of an n-th operator of the operators by a value b(n-1) times the state level, the value b(n-1) being obtained by multiplying a predetermined value b, which is less than 1, by n-1.

(11) The information processing system according to any one of (1) to (10), in which

the state of the operator regarding remote monitoring is configured to be a static state of the operator regarding remote monitoring.

(12) The information processing system according to (11), in which

the static state of the operator regarding remote monitoring is configured to be a proficiency state of the operator regarding remote monitoring.

(13) The information processing system according to any one of (1) to (12), in which

the state of the operator regarding remote monitoring is configured to be a dynamic state of the operator regarding remote monitoring.

(14) The information processing system according to (13), in which

the dynamic state of the operator regarding remote monitoring is configured to be an arousal state, a fatigue state, or a concentration state of the operator.

(15) The information processing system according to any one of (1) to (14), in which
the state of the vehicle is configured to be at least one of a static state or a dynamic state of the vehicle.

(16) The information processing system according to (15), in which
the static state of the vehicle is configured to be a characteristic of the vehicle.

(17) The information processing system according to (15) or (16), in which
the dynamic state of the vehicle is configured to be at least one of a driving state of the vehicle or a state of a peripheral environment.

(18) An information processing method for an information processing system, the method including:

a vehicle state determination step of determining states of a plurality of vehicles to be remotely monitored;
a monitoring state determination step of determining states of a plurality of operators regarding remote monitoring; and
an assignment step of assigning, on the basis of the states of the plurality of vehicles that are determined by processing of the vehicle state determination step and the states of the plurality of operators regarding remote monitoring that are determined by processing of the monitoring state determination step, one or more of the plurality of operators to each of the plurality of vehicles to remotely monitor the vehicle.

(19) An information processing apparatus, including
an assignment unit that assigns, on the basis of states of a plurality of vehicles to be remotely monitored and states of a plurality of operators regarding remote monitoring, one or more of the plurality of operators to each of the plurality of vehicles to remotely monitor the vehicle.

(20) The information processing apparatus according to (19), further including:

a vehicle state determination unit that determines the states of the plurality of vehicles; and
a monitoring state determination unit that determines the states of the plurality of operators regarding remote monitoring.

Reference Signs List

| | |
|---|---|
| 10 | management system |
| 11 | vehicle |
| 13 | management apparatus |
| 36 | vehicle state determination unit |
| 92 | monitoring state determination unit |
| 112 | assignment unit |
| 151 | operator |
| 200 | management system |
| 201 | vehicle |
| 203 | management apparatus |
| 216 | vehicle state determination unit |
| 232 | assignment unit |
| 300 | management system |
| 303 | management apparatus |
| 216 | vehicle state determination unit |
| 332 | assignment unit |
| 400 | management system |
| 401 | vehicle |
| 403 | management apparatus |
| 416 | vehicle state determination unit |
| 423 | monitoring state determination unit |
| 500 | management system |
| 501 | vehicle |
| 503 | management apparatus |
| 516 | vehicle state determination unit |
| 523 | monitoring state determination unit |

**EP 4 510 106 A1**

**Claims**

1. An information processing system, comprising:

   a vehicle state determination unit that determines states of a plurality of vehicles to be remotely monitored;
   a monitoring state determination unit that determines states of a plurality of operators regarding remote monitoring; and
   an assignment unit that assigns, at of the states of the plurality of vehicles that are determined by the vehicle state determination unit and the states of the plurality of operators regarding remote monitoring that are determined by the monitoring state determination unit, one or more of the plurality of operators to each of the plurality of vehicles to remotely monitor the vehicle.

2. The information processing system according to claim 1, wherein
   the assignment unit is configured to assign several operators of the plurality of operators to one vehicle of the plurality of vehicles.

3. The information processing system according to claim 2, wherein
   the assignment unit is configured to assign one or more of the plurality of operators to each part of the one vehicle to remotely monitor the part.

4. The information processing system according to claim 1, wherein
   the assignment unit is configured to assign one of the plurality of operators to the plurality of vehicles.

5. The information processing system according to claim 1, wherein

   the vehicle state determination unit is configured to calculate a required state level for each of the vehicles, the required state level being a level of the state of the operator regarding remote monitoring and being required to monitor the vehicle, on a basis of the state of the vehicle,
   the monitoring state determination unit is configured to calculate a state level for each of the operators, the state level being a level of the state of the operator regarding remote monitoring, on a basis of the state of the operator regarding remote monitoring, and
   the assignment unit is configured to assign, on a basis of the required state levels of the plurality of vehicles and the state levels of the plurality of operators, one or more of the plurality of operators to each of the plurality of vehicles to remotely monitor the vehicle.

6. The information processing system according to claim 5, wherein
   the assignment unit is configured to assign, if the state level of one of the plurality of operators is equal to or greater than the required state level of one of the plurality of vehicles, the one operator to the one vehicle.

7. The information processing system according to claim 5, wherein
   the assignment unit is configured to assign, if the state level of one of the plurality of operators is equal to or greater than a sum of the required state levels of several vehicles of the plurality of vehicles, the one operator to the several vehicles.

8. The information processing system according to claim 7, wherein
   the assignment unit is configured to increase, when the sum of the required state levels is calculated, the required state level of an n-th vehicle of the vehicles by a value a(n-1) times the required state level, the value a(n-1) being obtained by multiplying a predetermined value a, which is less than 1, by n-1.

9. The information processing system according to claim 5, wherein
   the assignment unit is configured to assign, if a sum of the state levels of several operators of the plurality of operators is equal to or greater than the required state level of one of the plurality of vehicles, the several operators to the one vehicle.

10. The information processing system according to claim 9, wherein
    the assignment unit is configured to decrease, when the sum of the state levels is calculated, the state level of an n-th operator of the operators by a value b(n-1) times the state level, the value b(n-1) being obtained by multiplying a predetermined value b, which is less than 1, by n-1.

29

11. The information processing system according to claim 1, wherein
the state of the operator regarding remote monitoring is configured to be a static state of the operator regarding remote monitoring.

12. The information processing system according to claim 11, wherein
the static state of the operator regarding remote monitoring is configured to be a proficiency state of the operator regarding remote monitoring.

13. The information processing system according to claim 1, wherein
the state of the operator regarding remote monitoring is configured to be a dynamic state of the operator regarding remote monitoring.

14. The information processing system according to claim 13, wherein
the dynamic state of the operator regarding remote monitoring is configured to be an arousal state, a fatigue state, or a concentration state of the operator.

15. The information processing system according to claim 1, wherein
the state of the vehicle is configured to be at least one of a static state or a dynamic state of the vehicle.

16. The information processing system according to claim 15, wherein
the static state of the vehicle is configured to be a characteristic of the vehicle.

17. The information processing system according to claim 15, wherein
the dynamic state of the vehicle is configured to be at least one of a driving state of the vehicle or a state of a peripheral environment.

18. An information processing method for an information processing system, the method comprising:

a vehicle state determination step of determining states of a plurality of vehicles to be remotely monitored;
a monitoring state determination step of determining states of a plurality of operators regarding remote monitoring; and
an assignment step of assigning, on a basis of the states of the plurality of vehicles that are determined by processing of the vehicle state determination step and the states of the plurality of operators regarding remote monitoring that are determined by processing of the monitoring state determination step, one or more of the plurality of operators to each of the plurality of vehicles to remotely monitor the vehicle.

19. An information processing apparatus, comprising
an assignment unit that assigns, on a basis of states of a plurality of vehicles to be remotely monitored and states of a plurality of operators regarding remote monitoring, one or more of the plurality of operators to each of the plurality of vehicles to remotely monitor the vehicle.

20. The information processing apparatus according to claim 19, further comprising:

a vehicle state determination unit that determines the states of the plurality of vehicles; and
a monitoring state determination unit that determines the states of the plurality of operators regarding remote monitoring.

FIG.1

# FIG.2

EP 4 510 106 A1

| Vehicle type | Passenger car (sedan) | Large-sized bus/Truck | Trailer |
|---|---|---|---|
| Basic score | 100 | 200 | 450 |

# FIG.3

| Type of road | Public road | Highway |
|---|---|---|
| Correction factor | 1. 0 | 0. 8 |

# FIG.4

| Type of traveling | Alone | Platoon | Parallel | Mixed |
|---|---|---|---|---|
| Correction factor | 1. 0 | 0. 8 | 1. 1 | 1. 4 |

FIG.5

| Weather | Sunny | Cloudy | Rainfall | Snowfall |
|---------|-------|--------|----------|----------|
| Factor | 1. 0 | 1. 1 | 1. 3 | 1. 8 |

FIG.6

| Years of automobile driving | ～5 | 6～9 | 10～19 | 20～ |
|---|---|---|---|---|
| Basic score | 50 | 100 | 150 | 200 |

FIG.7

EP 4 510 106 A1

| Reaction speed | ～0. 8s | 0. 9～1. 2s | 1. 3s～ |
|---|---|---|---|
| Correction factor | 1. 4 | 1. 0 | 0. 8 |

FIG.8

Proficiency level $P_i$:          110          250

Required proficiency level $Rp_j$:          100          100          100

FIG.9

| Speed of traveling | Low speed | Medium speed | High speed |
|---|---|---|---|
| Correction factor | 0. 4 | 1. 0 | 1. 6 |

# FIG.10

FIG.11

FIG.12

FIG.13

151-1 151-2 151-3 151-4

201-1

FIG.14

Assignment processing start

i = 1 | S31

Acquire proficiency level Pi of i-th operator | S32

S33
$P_i \geqq Rpp$ ?

NO

YES

S36
$i \geqq M$ ?

NO

YES

S37
i = i + 1

Assign part of vehicle as assignment target to i-th operator | S34

$P_i = P_i - Rpp$ | S35

End

FIG.15

FIG.16

EP 4 510 106 A1

FIG.17

FIG.18

Assignment processing start

$i = 1$   S51

Acquire proficiency level
$P_i$ of i-th operator   S52

S53
$P_i = 0$?   YES

NO

Assign part of vehicle as
assignment target to i-th
operator   S54

$Rpp = Rpp - P_i$   S55

S56
$Rpp > 0$?   YES

NO

$P_i = 0$   S58

$P_i = P_i - Rpp$   S57

S59
$i \geqq M$?   NO

YES

$i = i + 1$   S60

End

FIG.19

FIG.20

400

**Remote monitoring apparatus** 402

Sensor group 421
- Image sensor 431
- Biometric sensor 432

Operator state detection unit 422
- Concentration level detection unit 441
- Fatigue level detection unit 442
- Arousal level detection unit 443

Monitoring state determination unit 423

Notification unit 93

**Management apparatus** 403

Monitoring information management unit 113
- Monitoring DB 131

Assignment unit 112

Determination unit 451

Arousal level management unit 450
- Arousal level DB 461

14

**Vehicle** 401

Vehicle state determination unit 416

Vehicle management unit 35
- Vehicle DB 81

Driving state detection unit 32
- Passenger state detection unit 41
- Traveling state recognition unit 42
- Position detection unit 43

Sensor group 31
- Image sensor 51
- Biometric sensor 52
- Acceleration sensor 53
- Vehicle sensor 54
- GPS sensor 55

Peripheral environment detection unit 34
- External recognition unit 71
- Road surface condition detection unit 72
- Obstacle detection unit 73

Sensor group 33
- Image sensor 61
- Distance sensor 62
- Ultrasonic sensor 63
- Temperature and humidity sensor 64

Arousal level $A_i$:            100                    80        30

151-1                151-2            151-3

401-1                401-2

Required arousal level $Ra_j$:    100                    100

FIG.21

Assignment processing start

$i = 1$ S71

Acquire arousal level
Ai of i-th operator S72

S73
$A_i = 0$?
YES
NO

Assign vehicle as
assignment target to
i-th operator S74

$Ra = Ra - A_i$ S75

S76
$Ra > 0$?
YES
NO

$A_i = A_i - Ra$ S77

S78
$A_i = 0$

S79
$i \geq M$?
NO
YES

S80
$i = i + 1$

End

FIG.22

FIG.23

FIG.24

EP 4 510 106 A1

## INTERNATIONAL SEARCH REPORT

| International application No. |
| --- |
| **PCT/JP2023/012109** |

**A. CLASSIFICATION OF SUBJECT MATTER**

*G08G 1/09*(2006.01)i
FI:   G08G1/09 V

According to International Patent Classification (IPC) or to both national classification and IPC

**B. FIELDS SEARCHED**

Minimum documentation searched (classification system followed by classification symbols)

G06Q10/00-10/30, 30/00-30/08, 50/00-50/20, 50/26-99/00, G08G1/00-99/00, G16Z99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-52906 A (KDDI CORP) 02 April 2020 (2020-04-02) paragraphs [0004]-[0005], [0015]-[0018], [0024]-[0025], fig. 8 | 1-2, 4-8, 11-12, 15-20 |
| Y | | 13-14 |
| A | | 3, 9-10 |
| Y | JP 2018-77649 A (HONDA MOTOR CO LTD) 17 May 2018 (2018-05-17) paragraphs [0029]-[0030] | 13-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012109**

| Patent document cited in search report | | | Publication date (day/month/year) | Patent family member(s) | Publication date (day/month/year) |
|---|---|---|---|---|---|
| JP | 2020-52906 | A | 02 April 2020 | (Family: none) | |
| JP | 2018-77649 | A | 17 May 2018 | (Family: none) | |

Form PCT/ISA/210 (patent family annex) (January 2015)

**REFERENCES CITED IN THE DESCRIPTION**

**Patent documents cited in the description**

- JP 6697686 B
- JP 2021015378 A
- JP 2019185279 A
- JP 6650386 B